# EUROPEAN PATENT APPLICATION

(11) **EP 4 712 521 A1**
(43) Date of publication of application: **18.03.2026**
(21) Application number: 24818619.9
(22) Date of filing: 03.06.2024
(51) Int. Cl.: H04W 4/80

(54) **COMMUNICATION METHOD AND APPARATUS**

(30) Priority: 05.06.2023 CN 202310657937; 03.04.2024 CN 202410407959
(71) Applicant: Huawei Technologies Co., Ltd., Shenzhen, Guangdong 518129 (CN)
(72) Inventor: HAN, Zhilin, Shenzhen, Guangdong 518129 (CN); XU, Yishan, Shenzhen, Guangdong 518129 (CN)
(74) Representative: Epping - Hermann - Fischer
(86) International application number: PCT/CN2024/097078
(87) International publication number: WO 2024/251087

(57) **Abstract**

This application discloses a communication method and apparatus. The method includes: A first network element receives an operation request for a passive terminal sent by a requester, where the first network element is in a home network of the passive terminal. The first network element determines, based on the operation request or a network accessed by the passive terminal last time, a first network that the requester requests to access. The first network element sends a request message to a second network element in the first network, where the request message is generated based on the operation request, and the request message indicates the second network element to operate the passive terminal. According to this application, the requester (an enterprise or an individual user) can operate the passive terminal across networks (that is, in a roaming scenario).

## Description

This application claims priority to Chinese Patent Application No. 202310657937.5, filed with the China National Intellectual Property Administration on June 5, 2023 and entitled "COMMUNICATION METHOD AND APPARATUS", and to Chinese Patent Application No. 202410407959.0, filed with the China National Intellectual Property Administration on April 3, 2024 and entitled "COMMUNICATION METHOD AND APPARATUS", which are incorporated herein by reference in their entireties.

### TECHNICAL FIELD

This application relates to the field of communication technologies, and in particular, to a communication method and apparatus.

### BACKGROUND

Currently, in a roaming procedure of user equipment (User Equipment, UE), the UE performs access via an access network device of another operator. In this period, the UE first performs a network selection procedure. Specifically, the UE monitors public land mobile network (Public Land Mobile Network, PLMN) identifiers broadcast by different base stations, then selects an available PLMN based on priorities in a network list stored in a universal subscriber identity module (Universal Subscriber Identity Module, USIM) card of the UE, and responds to broadcasting of a base station, to access the base station.

However, in roaming scenarios of passive terminals, the passive terminal does not carry a SIM card and a network identifier in identifier composition is only an identifier of a home network of the passive terminal due to lightweight design of the passive terminal. Therefore, the passive terminal cannot respond to broadcasting of a radio access network (Radio Access Network, RAN) device in a visited network of the passive terminal, and cannot actively access the network. As a result, a requester (an enterprise or an individual user) that is authorized to operate the passive terminal cannot operate the passive terminal across networks or communicate with the passive terminal.

### SUMMARY

Embodiments of this application provide a communication method and apparatus, so that a requester (an enterprise or an individual user) can operate a passive terminal across networks (that is, in a roaming scenario).

According to a first aspect, this application provides a communication method. The method includes: A first network element receives an operation request for a passive terminal sent by a requester, where the first network element is in a home network of the passive terminal. The first network element determines, based on the operation request or a network accessed by the passive terminal last time, a first network that the requester requests to access. The first network element sends a request message to a second network element in the first network, where the request message is generated based on the operation request, and the request message indicates the second network element to operate the passive terminal.

When the second network element successfully operates the passive terminal, the first network is a visited network.

From a perspective of technical effects, for a roaming scenario of the passive terminal, in this application, the first network element on a home network side actively searches for the visited network of the passive terminal, and then establishes a communication connection to the passive terminal via the second network element in the visited network, to operate the passive terminal across networks.

In a feasible implementation, the operation request includes a geographical location of the passive terminal; and that the first network element determines, based on the operation request, the first network that the requester requests to access includes: The first network element determines, as the first network based on a mapping relationship between a geographical location and a network, a network corresponding to the geographical location of the passive terminal, where each geographical location corresponds to one or more networks.

In this application, a mapping relationship between a geographical location and an accessible network at the geographical location is established in advance. In the mapping relationship, each geographical location corresponds to one or more networks.

Optionally, the geographical location of the passive terminal may be known to the requester, and a corresponding scenario is that the requester performs a cross-network operation on the passive terminal at the known geographical location, or the geographical location of the passive terminal may be obtained from a route of the passive terminal.

In a feasible implementation, the operation request includes an identifier of the passive terminal; and that the first network element determines, based on the operation request, the first network that the requester requests to access includes: The first network element determines, based on a mapping relationship between an identifier of a passive terminal and a base station, one or more base stations corresponding to the identifier of the passive terminal, and uses, as the first network, a network corresponding to the one or more base stations.

In the mapping relationship between the identifier of the passive terminal and the base station, an identifier of each passive terminal corresponds to one or more base stations.

Optionally, the network corresponding to the one or more base stations is a network configured for each of the one or more base stations.

There are one or more first networks in this embodiment of this application.

From the perspective of technical effects, in this application, the first network is determined based on the mapping relationship between the geographical location and the network or the mapping relationship between the identifier of the passive terminal and the base station, to implement a subsequent cross-network operation on the passive terminal over the network.

In a feasible implementation, that the first network element determines, based on the network accessed by the passive terminal last time, the first network that the requester requests to access includes: The first network element determines, as the first network, the network accessed by the passive terminal last time.

From the perspective of technical effects, in the foregoing manner, the first network that the requester requests to access can be quickly determined, to improve process efficiency of performing the cross-network operation on the passive terminal.

In a feasible implementation, the method further includes: The first network element stores a network identifier of the first network, or sends a network identifier of the first network to a third network element for storage.

The third network element is in the home network of the passive terminal.

From the perspective of technical effects, in this application, the network identifier of the first network is stored each time the passive terminal is operated, so that the network accessed by the passive terminal last time can be directly determined as the first network when the passive terminal is operated next time.

In a feasible implementation, the method further includes: The first network element sends a mask to the second network element, where the mask includes the network identifier of the first network or a network identifier of the home network.

In a feasible implementation, the mask further includes a first user identifier and/or an identifier range of the passive terminal; and the first user identifier indicates the requester, and the identifier range of the passive terminal is generated based on an identifier of the passive terminal.

When the passive terminal subsequently receives a broadcast message including the mask, the passive terminal determines, based on content in the mask, whether to perform random access, to implement screening of passive terminals that need to be operated within a coverage area of a reader.

In a feasible implementation, the identifier of the passive terminal includes one or more of a network identifier list, a second user identifier, or a sequence number; and the network identifier list includes a network identifier of one or more networks that the passive terminal is authorized to access, the second user identifier indicates a requester that is authorized to operate the passive terminal, and the sequence number is an electronic product code EPC, a tag identifier TID, or a mobile subscriber identification number MSIN.

From the perspective of technical effects, in this application, the identifier of the passive terminal is enhanced, so that the passive terminal can subsequently determine whether random access is completed after receiving the broadcast message from the reader. Compared with a conventional technology in which the passive terminal includes only an identifier of the home network of the passive terminal, an access capability of the passive terminal is effectively improved, so that the requester can operate the passive terminal across networks.

According to a second aspect, this application provides a communication method. The method includes: A second network element receives a request message for a passive terminal sent by a first network element, and sends a first message generated based on the request message to a reader, where the first message indicates the reader to complete random access with the passive terminal, the request message is generated based on an operation request sent by a requester to the first network element, the first network element is in a home network of the passive terminal, and the second network element is in a first network that the requester requests to access. The second network element receives a second message sent by the passive terminal via the reader, and determines the home network of the passive terminal based on the second message. The second network element sends a third message to the requester over the home network, where the third message is generated in response to the request message.

From a perspective of technical effects, in an uplink, the home network of the passive terminal is determined by the second network element in the first network, and the third message needed by the requester is sent to the requester over the home network, so that the requester can operate the passive terminal across networks.

In a feasible implementation, the first message includes a mask, and the mask is generated by the second network element based on the request message or received from the first network element; and the mask includes a network identifier of the home network or a network identifier of the first network.

In a feasible implementation, the mask further includes a first user identifier and/or an identifier range of the passive terminal; and the first user identifier indicates the requester, and the identifier range of the passive terminal is generated based on an identifier of the passive terminal.

In a feasible implementation, the determining the home network of the passive terminal based on the second message includes: The second network element determines, as the home network of the passive terminal based on a mapping relationship between a user identifier and a home network, a home network corresponding to a second user identifier in the second message, where the second user identifier indicates a requester that is authorized to operate the passive terminal; the second network element determines, based on a mapping relationship between a terminal identifier and a home network, a home network corresponding to the identifier of the passive terminal in the second message; the second network element obtains the network identifier of the home network from the second message; or the second network element determines, based on a mapping relationship between a tunnel identifier and a user identifier, a first user identifier corresponding to a tunnel carrying the second message, and determines, as the home network of the passive terminal based on a mapping relationship between a user identifier and a home network, a home network corresponding to the first user identifier, where the first user identifier indicates the requester.

Each requester (corresponding to a user identifier) corresponds to a tunnel identifier, that is, a request message corresponding to the requester is sent through a corresponding tunnel (between the reader and the second network element).

Optionally, the tunnel may be a group-NGAP tunnel, and the tunnel identifier may be an NG application protocol identifier (NG Application Protocol Identifier, NGAP ID).

In a feasible implementation, when the second message carries the mask and the mask includes the network identifier of the home network, the determining the home network of the passive terminal based on the second message includes: The second network element obtains the network identifier of the home network from the mask carried in the second message.

From the perspective of technical effects, in this application, the second network element may determine the home network of the passive terminal in the foregoing manner, and then send the third message to the requester over the home network, so that the requester can operate the passive terminal across networks.

In a feasible implementation, the second message further includes the network identifier of the home network and/or an indication message, and the indication message indicates that the network identifier included in the mask is different from the network identifier of the home network.

In a feasible implementation, the method further includes: before the second network element sends the third message to the requester, the second network element confirms that the requester is authorized to operate the passive terminal.

Specifically, when a tag identifier of the passive terminal does not include the second user identifier, before the second network element sends the third message to the requester, the second network element confirms that the requester is authorized to operate the passive terminal.

From the perspective of technical effects, the second network element performs the foregoing determining before sending the third message, so that the third message is not sent to a requester that is not authorized to operate the passive terminal, to effectively ensure data security.

In a feasible implementation, the identifier of the passive terminal includes one or more of a network identifier list, the second user identifier, or a sequence number; and the network identifier list includes a network identifier of one or more networks subscribed to by the passive terminal, the second user identifier indicates the requester that is authorized to operate the passive terminal, and the sequence number is an electronic product code EPC or a tag identifier TID.

In a feasible implementation, the first network element is an access and mobility management function AMF network element or a tag management function TMF network element, and the second network element is an access and mobility management function AMF network element, a tag management function TMF network element, or a network exposure function NEF network element.

According to a third aspect, this application provides a communication method. The method includes: A passive terminal receives a broadcast message sent by a reader, where the broadcast message is generated based on a first message sent by a second network element to the reader, the broadcast message includes a network identifier of a first network, the second network element is in the first network, the first message is generated based on a request message sent by a first network element to the second network element, and the first network element is in a home network of the passive terminal. After the passive terminal confirms that the network identifier of the first network is in a network identifier list included in an identifier of the passive terminal, the passive terminal completes random access to the reader.

When the second network element successfully operates the passive terminal, the first network is a visited network.

From a perspective of technical effects, when the broadcast message includes the network identifier of the first network, the passive terminal determines, based on accessibility of the network, whether to complete random access, to implement screening of passive terminals within a coverage area of the reader.

In a feasible implementation, the first network element is an access and mobility management function AMF network element or a tag management function TMF network element, and the second network element is an access and mobility management function AMF network element, a tag management function TMF network element, or a network exposure function NEF network element.

In a feasible implementation, the identifier of the passive terminal includes one or more of the network identifier list, a second user identifier, or a sequence number; and the network identifier list includes a network identifier of one or more networks subscribed to by the passive terminal, the second user identifier indicates a requester that is authorized to operate the passive terminal, and the sequence number is an electronic product code EPC or a tag identifier TID.

According to a fourth aspect, this application provides a communication method. The method includes: A requester determines a first network to be accessed. The requester sends an operation request to a second network element in the first network over a home network of a passive terminal, where the operation request indicates the second network element to operate the passive terminal. From a perspective of technical effects, in this embodiment, the requester may actively perform downlink transmission, search for the first network to be accessed by the requester, and perform a cross-network operation on the passive terminal over the first network.

In a feasible implementation, that the requester determines the first network requested to access includes: The requester determines the first network from one or more networks, where the one or more networks are networks that the requester is authorized to use.

The network that the requester is authorized to use may be a network that an operator authorizes the requester to use.

In a feasible implementation, the second network element is an access and mobility management function AMF network element, a tag management function TMF network element, or a network exposure function NEF network element.

In a feasible implementation, the method further includes: The requester sends a mask to the second network element, where the mask includes a network identifier of the home network or a network identifier of the first network.

In a feasible implementation, the mask further includes a first user identifier and/or an identifier range of the passive terminal; and the first user identifier indicates the requester, and the identifier range of the passive terminal is generated based on an identifier of the passive terminal.

In a feasible implementation, the identifier of the passive terminal includes one or more of a network identifier list, a second user identifier, or a sequence number; and the network identifier list includes a network identifier of one or more networks subscribed to by the passive terminal, the second user identifier indicates a requester that is authorized to operate the passive terminal, and the sequence number is an electronic product code EPC or a tag identifier TID.

According to a fifth aspect, this application provides a communication method. The method includes: A second network element receives an operation request sent by a requester over a home network of a passive terminal, and sends a fourth message generated based on the operation request to a reader, where the fourth message indicates the reader to complete random access with the passive terminal, and the second network element is in a first network that the requester requests to access. The second network element receives a fifth message sent by the passive terminal via the reader, and determines the home network of the passive terminal based on the fifth message. The second network element sends a sixth message to the requester over the home network, where the sixth message is generated in response to the operation request.

From a perspective of technical effects, in an uplink, the home network of the passive terminal is determined by the second network element in the first network, and the sixth message needed by the requester is sent to the requester over the home network, so that the requester can operate the passive terminal across networks.

In a feasible implementation, the fourth message includes a mask, and the mask is generated by the second network element based on the request message or received from the first network element; and the mask includes a network identifier of the home network or a network identifier of the first network.

In a feasible implementation, the mask further includes a first user identifier and/or an identifier range of the passive terminal; and the first user identifier indicates the requester, and the identifier range of the passive terminal is generated based on an identifier of the passive terminal.

In a feasible implementation, the determining the home network of the passive terminal based on the fifth message includes: The second network element determines, as the home network of the passive terminal based on a mapping relationship between a user identifier and a home network, a home network corresponding to a second user identifier in the fifth message, where the second user identifier indicates a requester that is authorized to operate the passive terminal; the second network element determines, based on a mapping relationship between a terminal identifier and a home network, a home network corresponding to the identifier of the passive terminal in the fifth message; the second network element obtains the network identifier of the home network from the fifth message; or the second network element determines, based on a mapping relationship between a tunnel identifier and a user identifier, a first user identifier corresponding to a tunnel carrying the fifth message, and determines, as the home network of the passive terminal based on a mapping relationship between a user identifier and a home network, a home network corresponding to the first user identifier, where the first user identifier indicates the requester.

In a feasible implementation, when the fifth message carries the mask and the mask includes the network identifier of the home network, the determining the home network of the passive terminal based on the second message includes: The second network element obtains the network identifier of the home network from the mask carried in the fifth message.

In a feasible implementation, the fifth message further includes the network identifier of the home network and/or an indication message, and the indication message indicates that the network identifier included in the mask is different from the network identifier of the home network.

In a feasible implementation, the method further includes: before the second network element sends the sixth message to the requester, the second network element confirms that the requester is authorized to operate the passive terminal.

In a feasible implementation, the identifier of the passive terminal includes one or more of a network identifier list, the second user identifier, or a sequence number; and the network identifier list includes a network identifier of one or more networks subscribed to by the passive terminal, the second user identifier indicates the requester that is authorized to operate the passive terminal, and the sequence number is an electronic product code EPC or a tag identifier TID.

In a feasible implementation, the second network element is an access and mobility management function AMF network element, a tag management function TMF network element, or a network exposure function NEF network element.

According to a sixth aspect, this application provides a communication method. The method includes: A passive terminal receives a broadcast message sent by a reader, where the broadcast message is generated based on a fourth message sent by a second network element to the reader, the fourth message is generated based on an operation request sent by a requester to the second network element over a home network of the passive terminal, the broadcast message includes a network identifier of a first network, and the second network element is in the first network. After the passive terminal confirms that the network identifier of the first network is in a network identifier list included in an identifier of the passive terminal, the passive terminal completes random access to the reader.

In a feasible implementation, the identifier of the passive terminal includes one or more of the network identifier list, a second user identifier, or a sequence number; and the network identifier list includes a network identifier of one or more networks subscribed to by the passive terminal, the second user identifier indicates a requester that is authorized to operate the passive terminal, and the sequence number is an electronic product code EPC or a tag identifier TID.

In a feasible implementation, the second network element is an access and mobility management function AMF network element, a tag management function TMF network element, or a network exposure function NEF network element.

According to a seventh aspect, this application provides a communication method. The method includes: A passive terminal receives a broadcast message sent by a reader, where the broadcast message includes a network identifier of a network that the reader is authorized to access. After the passive terminal confirms that the network identifier of the network that the reader is authorized to access is in a network identifier list included in an identifier of the passive terminal, the passive terminal completes random access to the reader.

When the reader is a base station, the network that the reader is authorized to access is a network configured for the base station.

In a feasible implementation, the identifier of the passive terminal includes one or more of the network identifier list, a second user identifier, or a sequence number; and the network identifier list includes a network identifier of one or more networks subscribed to by the passive terminal, the second user identifier indicates a requester that is authorized to operate the passive terminal, and the sequence number is an electronic product code EPC or a tag identifier TID.

According to an eighth aspect, this application provides a communication method. The method includes: A second network element receives a seventh message sent by a passive terminal via a reader, and determines a home network of the passive terminal based on the seventh message, where the second network element is in a first network. The second network element sends, over the home network, an eighth message to a requester that is authorized to operate the passive terminal, where the eighth message includes an identifier X of the passive terminal.

When the second network element successfully sends the eighth message, the first network is a visited network.

In a feasible implementation, the determining the home network of the passive terminal based on the seventh message includes: The second network element determines, as the home network of the passive terminal based on a mapping relationship between a user identifier and a home network, a home network corresponding to a second user identifier in the seventh message, where the second user identifier indicates a requester that is authorized to operate the passive terminal; the second network element determines, based on a mapping relationship between a terminal identifier and a home network, a home network corresponding to the identifier of the passive terminal in the seventh message; or the second network element obtains a network identifier of the home network from the seventh message. In a feasible implementation, the eighth message further includes a part or all of data stored in the passive terminal.

In a feasible implementation, the second network element is an access and mobility management function AMF network element, a tag management function TMF network element, or a network exposure function NEF network element.

In a feasible implementation, the identifier of the passive terminal includes one or more of a network identifier list, the second user identifier, or a sequence number; and the network identifier list includes a network identifier of one or more networks subscribed to by the passive terminal, the second user identifier indicates the requester that is authorized to operate the passive terminal, and the sequence number is an electronic product code EPC or a tag identifier TID.

According to a ninth aspect, this application provides a communication method. The method includes: A second network element obtains roaming indication information, where the roaming indication information indicates a reader to send a broadcast message in a first frequency band, so that a passive terminal receives the broadcast message, and the first frequency band is different from a frequency band of a network that a requester requests to access. The second network element sends the roaming indication information to one or more readers, where the one or more readers are within a service range of the second network element.

In an example, the first frequency band is an unlicensed frequency band or a licensed frequency band of another operator.

From a perspective of technical effects, when the passive terminal is in a roaming state, the second network element sends, to the reader, the roaming indication information indicating the reader to send the broadcast message in the first frequency band, so that the passive terminal can complete random access to the reader, and the requester can operate the passive terminal.

In a feasible implementation, that the second network element obtains the roaming indication information includes: The second network element receives roaming indication information from a first network element, where the roaming indication information is generated when the first network element determines that an operation area requested by the requester does not belong to a service range of a home network of the passive terminal, the first network element belongs to the home network of the passive terminal, and the second network element belongs to a network covering the operation area of the requester.

In a feasible implementation, that the second network element obtains the roaming indication information includes: After receiving an operation request from the requester, the second network element sends a first request to a fifth network element, where the first request includes an identifier of a passive terminal to be operated; and receives roaming indication information from the fifth network element, where the roaming indication information is generated when the fifth network element determines that subscription information of the fifth network element does not include the identifier of the passive terminal, and the second network element and the fifth network element belong to the network that the requester requests to access.

In a feasible implementation, that the second network element obtains the roaming indication information includes:
The second network element obtains a network identifier of a home network of the passive terminal, or an interface for signaling exchange between the second network element and a first network element, where the first network element belongs to the home network of the passive terminal. The second network element generates the roaming indication information if determining, based on the network identifier of the home network of the passive terminal, that the home network of the passive terminal is not a first network or the interface for signaling exchange between the second network element and the first network element is a roaming interface, where the first network is a network that the requester requests to access.

In a feasible implementation, that the second network element obtains the roaming indication information includes: After receiving an operation request from the requester, the second network element sends a first request to a fifth network element, where the first request includes an identifier of a passive terminal to be operated. The second network element receives first indication information from the fifth network element, where the first indication information is generated when the fifth network element determines that subscription information of the fifth network element does not include the identifier of the passive terminal to be operated, the first indication information indicates that the subscription information of the fifth network element does not include the identifier of the passive terminal to be operated, and the second network element and the fifth network element belong to the network that the requester requests to access. The second network element generates the roaming indication information based on the first indication information.

In a feasible implementation, the method in this embodiment further includes:
The second network element obtains the operation area requested by the requester; and determines the one or more readers based on the operation area requested by the requester, where a coverage area of the one or more readers includes the operation area.

According to a tenth aspect, this application provides a communication method. The method includes: A reader receives roaming indication information from a second network element. The reader sends a broadcast message in a first frequency band based on the roaming indication information, where the first frequency band is different from a frequency band of a network that a requester requests to access.

In an example, the first frequency band is an unlicensed frequency band or a licensed frequency band of another operator.

From a perspective of technical effects, when a passive terminal is in a roaming state, the reader sends the broadcast message in the first frequency band, so that the passive terminal can complete random access to the reader, and the requester can operate the passive terminal.

According to an eleventh aspect, an embodiment of this application provides a communication apparatus. The communication apparatus includes at least one processor and a memory. The memory is configured to store a computer program or instructions. The at least one processor is configured to execute the computer program or the instructions in the memory, so that the method in any one of the possible implementations of the first aspect to the tenth aspect is performed. According to a twelfth aspect, an embodiment of this application provides a communication system. The communication system includes a first network element and a second network element, the first network element is configured to perform the method according to the first aspect, and the second network element is configured to perform the method according to the second aspect. According to a thirteenth aspect, an embodiment of this application provides a communication system. The communication system includes a first network element, a second network element, and a passive terminal. The first network element is configured to perform the method according to the first aspect, the second network element is configured to perform the method according to the second aspect, and the passive terminal is configured to perform the method according to the third aspect.

According to a fourteenth aspect, an embodiment of this application provides a communication system. The communication system includes a second network element and a requester. The requester is configured to perform the method according to the fourth aspect, and the second network element is configured to perform the method according to the fifth aspect.

According to a fifteenth aspect, an embodiment of this application provides a communication system. The communication system includes a second network element, a requester, and a passive terminal. The requester is configured to perform the method according to the fourth aspect, the second network element is configured to perform the method according to the fifth aspect, and the passive terminal is configured to perform the method according to the sixth aspect.

According to a sixteenth aspect, an embodiment of this application provides a communication system. The communication system includes a second network element and a passive terminal. The second network element is configured to perform the method according to the eighth aspect, and the passive terminal is configured to perform the method according to the seventh aspect.

According to a seventeenth aspect, an embodiment of this application provides a communication system. The communication system includes a second network element and a reader. The second network element is configured to perform the method according to the ninth aspect, and the reader is configured to perform the method according to the tenth aspect.

According to an eighteenth aspect, an embodiment of this application provides a computer-readable storage medium. The computer-readable storage medium stores computer instructions. When the computer instructions are executed, a computer is enabled to perform the method in any one of the foregoing methods.

According to a nineteenth aspect, an embodiment of this application provides a computer program product. The computer program product includes computer program code. When the computer program code is run on a computer, the computer is enabled to perform the method in any one of the foregoing methods.

According to a twentieth aspect, an embodiment of this application provides a chip. The chip is coupled to a memory, and is configured to read and execute program instructions in the memory, so that an apparatus in which the chip is located implements the method in any one of the foregoing methods.

### BRIEF DESCRIPTION OF DRAWINGS

The following describes accompanying drawings used in embodiments of this application.
FIG. 1A and FIG. 1B show network architectures of two 5G communication systems according to an embodiment of this application;
FIG. 2A and FIG. 2B are diagrams of two architectures of a passive internet of things according to an embodiment of this application;
FIG. 3A to FIG. 3D show four network architectures in a roaming scenario according to an embodiment of this application;
FIG. 4 is a schematic flowchart of a communication method according to an embodiment of this application;
FIG. 5A and FIG. 5B are two diagrams of an interaction process between devices in a passive internet of things according to an embodiment of this application;
FIG. 6 shows an example of a random access procedure according to an embodiment of this application;
FIG. 7 shows a specific example of a passive internet of things for implementing a communication method in this application according to an embodiment of this application;
FIG. 8 shows another specific example of a passive internet of things for implementing a communication method in this application according to an embodiment of this application;
FIG. 9 is a schematic flowchart of another communication method according to an embodiment of this application;
FIG. 10A and FIG. 10B are two other diagrams of an interaction process between devices in a passive internet of things according to an embodiment of this application;
FIG. 11 shows still another specific example of a passive internet of things for implementing a communication method in this application according to an embodiment of this application;
FIG. 12 shows yet another specific example of a passive internet of things for implementing a communication method in this application according to an embodiment of this application;
FIG. 13 is a schematic flowchart of still another communication method according to an embodiment of this application;
FIG. 14 is a diagram of an interaction process between devices in a passive internet of things according to an embodiment of this application;
FIG. 14A is a schematic flowchart of yet another communication method according to an embodiment of this application;
FIG. 14B to FIG. 14D are three other diagrams of an interaction process between devices in a passive internet of things according to an embodiment of this application;
FIG. 14E to FIG. 14G show three other specific examples of a passive internet of things for implementing a communication method in this application according to an embodiment of this application;
FIG. 15 is a diagram of a structure of a communication apparatus according to an embodiment of this application;
FIG. 16 is a diagram of a simplified structure of an AN device according to an embodiment of this application; and
FIG. 17 is a diagram of a simplified structure of UE according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same network elements or purposes. Persons skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

The following describes a communication system to which embodiments of this application are applicable.

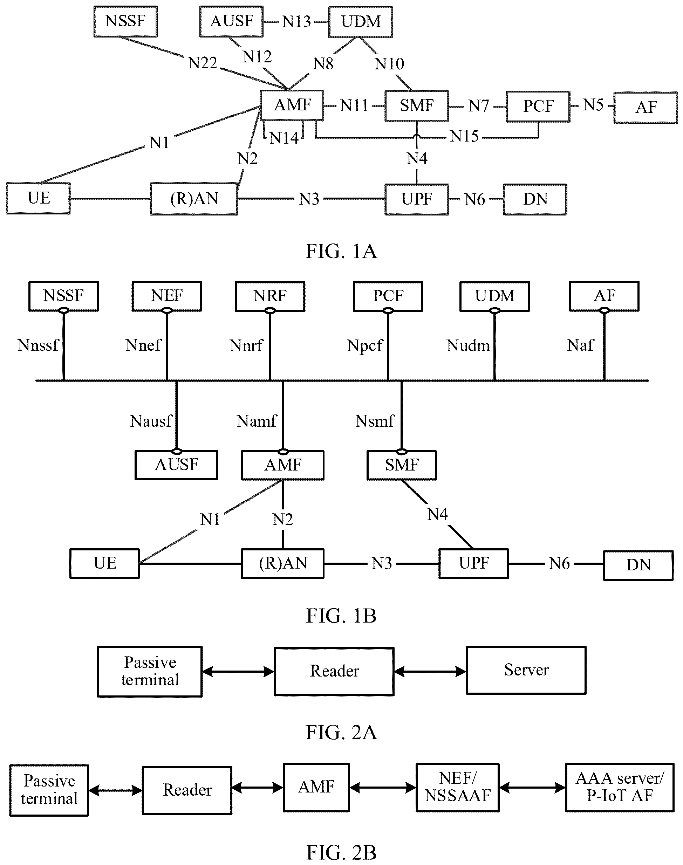

The technical solutions in embodiments of this application may be applied to a passive internet of things. The passive internet of things may be constructed based on various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, a future communication system, or another similar communication system. Without special descriptions, the following uses the passive internet of things constructed based on the 5G mobile communication system as an example for description. For ease of understanding embodiments of this application, FIG. 1A and FIG. 1B show network architectures of two 5G communication systems used to construct a passive internet of things. FIG. 1A shows a network architecture of a 5G communication system according to an embodiment of this application. The network architecture may include a terminal device part, an access network (access network, AN) part, and a core network part. Optionally, the network architecture may further include a data network (data network, DN) part and/or include an application network element part. A terminal device accesses a core network over an access network, and the core network communicates with a DN or an application network element.

The terminal device (terminal device), also referred to as user equipment (user equipment, UE), a terminal, or the like, is a device that has a wireless transceiver function. The terminal device may be deployed on land, including an indoor device, an outdoor device, a handheld device, or a vehicle-mounted device; or may be deployed on water (for example, on a ship); or may be deployed in the air (for example, on a plane, a balloon, or a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in a remote medical (remote medical), a wireless terminal in a smart grid (smart grid), a wireless terminal in transportation safety (transportation safety), a wireless terminal in a smart city (smart city), a wireless terminal in a smart home (smart home), a wireless terminal in an internet of things (internet of things, IoT), or the like.

The AN part includes an AN device. The AN device is a device that connects the terminal device to a wireless network in a mobile communication system. As a node in a radio access network, the AN device may also be referred to as an access network element, a base station, a radio access network (radio access network, RAN) node (device or network element), an access point (access point, AP), a network device, a small tower, or the like. The RAN device in embodiments of this application includes but is not limited to a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point, a world interoperability for microwave access (world interoperability for microwave access, WiMAX) base station, a transmitting and receiving point (transmitting and receiving point, TRP), a transmitting point (transmitting point, TP), a mobile switching center, and the like. In systems using different radio access technologies, a device having a function of a base station may be named differently. For example, the device is referred to as a RAN or a gNB (5G NodeB) in a 5G communication system, referred to as an evolved NodeB (evolved NodeB, eNB or eNodeB) in an LTE system, and referred to as a NodeB (NodeB) in a 3rd generation (3rd generation, 3G) communication system. In some deployments of the AN device, the AN device may include a central unit (central unit, CU), a distributed unit (distributed unit, DU), and the like. In some other deployments of the AN device, the CU may be further divided into a CU-control plane (control plane, CP), a CU-user plane (user plane, UP), and the like. In some other deployments of the AN device, the AN device may alternatively be a radio unit (radio unit, RO). In some other deployments of the AN device, the AN device may be an open radio access network (open radio access network, ORAN) architecture or the like. For example, when the AN device is an ORAN architecture, the AN device in embodiments of this application may be an access network element in an ORAN, a module of the access network element, or the like. In an ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU.

The DN is a network located outside the mobile communication system, and may provide a service for a user. For example, the DN may be a packet data network (packet data network, PDN), for example, the internet (internet), an internet protocol multi-media service (internet protocol multi-media service, IMS) network, a data network dedicated to some applications, the Ethernet, or an internet protocol (internet protocol, IP) local network. This is not limited in embodiments of this application. A plurality of services may be deployed on the DN, to provide services including data and/or voice and the like for the terminal device. The DN may include a plurality of application servers (application server, AS), and each AS may provide at least one service.

The application network element mainly supports interacting with a 3GPP core network to provide services, for example, influence on traffic routing decision, a policy control function, or some third-party services provided for a network side. In the 5G communication system, the application network element may be an application function (application function, AF) network element. In a future communication system, the application network element may still be the AF network element, or may have another name. This is not limited in embodiments of this application. Network elements in the core network part may be classified into two types: a user plane function network element (which may also be referred to as a user plane network element briefly) and a control plane function network element (which may also be referred to as a control plane network element briefly). The control plane function network element includes an access management network element, a network exposure network element, a session management network element, a data management network element, a policy control network element, a network slice-specific and standalone non-public network (Standalone Non-Public Network, SNPN) authentication and authorization function (Network Slice-specific and SNPN Authentication and Authorization Function, NSSAAF) network element in the 5G communication system, and the like.

The user plane network element is responsible for forwarding and reception of user data in the terminal device. The user plane network element may receive user data from the data network, and transmit the user data to the terminal device via the access network device. In addition, the user plane network element may further receive user data from the terminal device via the access network device, and forward the user data to the data network. A transmission resource and a scheduling function in the user plane network element that provide a service for the terminal device are managed and controlled by an SMF network element. In the 5G communication system, the user plane network element may be a user plane function (user plane function, UPF) network element. In the future communication system, the user plane network element may still be the UPF network element, or may have another name. This is not limited in embodiments of this application. The access management network element is a control plane network element provided by an operator network, and is responsible for access control and mobility management for accessing the operator network by the terminal device, for example, including functions such as mobility status management, allocation of temporary user identities, and user authentication. In the 5G communication system, the access management network element may be an access and mobility management function (access and mobility management function, AMF) network element. In the future communication system, the access management network element may still be the AMF network element, or may have another name. This is not limited in embodiments of this application. The network exposure network element is mainly responsible for supporting secure interaction between a 3GPP network and a third-party application, and can securely expose network capabilities and events to a third party, to enhance or improve quality of service of the application, and can also ensure that the 3GPP network securely obtains related data from the third party, to enhance intelligent decision-making of the network. In addition, the network element supports restoring structured data from a unified data repository or storing structured data in the unified data repository. In the 5G communication system, the network exposure network element may be a network exposure function (Network Exposure Function, NEF) network element. In the future communication system, the network exposure network element may still be the NEF network element, or may have another name. This is not limited in embodiments of this application.

The session management network element is mainly responsible for session management in a mobile network, for example, session establishment, modification, and release. Specific functions are, for example, allocating an IP addresses to users, and selecting a user plane network element that provides a packet forwarding function. In the 5G communication system, the session management network element may be a session management function (session management function, SMF) network element. In the future communication system, the session management network element may still be the SMF network element, or may have another name. This is not limited in embodiments of this application.

The data management network element is configured to generate an authentication credential, process a subscriber identifier (for example, store and manage a subscription permanent identifier), control access, manage subscription data, and so on. In the 5G communication system, the data management network element may be a unified data management (unified data management, UDM) network element. In the future communication system, the unified data management may still be the UDM network element, or may have another name. This is not limited in embodiments of this application.

The policy control network element mainly supports providing a unified policy framework to govern network behavior and providing a policy rule to a control layer network function, and is responsible for obtaining user subscription information related to policy decision-making. In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be the PCF network element, or may have another name. This is not limited in embodiments of this application.

A tag management function (TMF) network element, also referred to as an AIoT management network element, mainly provides a function of managing an AIoT device (for example, a passive terminal in this application) and a service, for example, authorizing a service request for requesting to operate the AIoT device, routing AIoT service-related signaling, authenticating the AIoT device, storing AIoT service-related information, performing operations such as inventory, read, write, and disable on the AIoT device, and generating a mask. The AIoT management network element may be a TMF network element, or may be an AloTMF, or may have another name. This is not limited in embodiments of this application.

FIG. 1A further shows interfaces for interaction between network elements, for example, an N1 interface for interaction between UE and an AMF. The interfaces are not listed one by one herein. The foregoing mainly describes network elements that may be used in embodiments of this application. In addition, FIG. 1A further relates to other network elements, such as a network slice selection function (Network Slice Selection Function, NSSF) network element and an authentication server function (Authentication Server Function, AUSF) network element. Details are not described herein. In addition, the core network may further include a unified data repository (unified data repository, UDR) network element (not shown in FIG. 1A). For another example, the core network may further include a network repository function (network repository function, NRF) network element (not shown in FIG. 1A).

FIG. 1B shows a network architecture of another 5G communication system according to an embodiment of this application. Compared with the network architecture shown in FIG. 1A, the network architecture shows that some network elements may interact with other network elements through a service-based interface. For example, an NSSF network element may interact with other network elements through an Nnssf interface. For details, refer to FIG. 1B. Details are not listed one by one in this application. In addition, compared with the network architecture in FIG. 1A, a NEF network element and an NRF network element are added to the network architecture in FIG. 1B.

It may be understood that the network elements or functions shown in FIG. 1A and FIG. 1B may be network elements in a hardware device, software functions running on dedicated hardware, or virtualized functions instantiated on a platform (for example, a cloud platform). In a possible implementation, the network elements or functions may be implemented by one device, may be jointly implemented by a plurality of devices, or may be one functional module in one device. This is not specifically limited in embodiments of this application. In addition, for ease of description, the "network element" may be omitted in the following. For example, the SMF network element and the SMF in embodiments of this application express a same meaning. For ease of description, the two words "network element" are omitted, and other terms are similar. In addition, it should be further noted that names of network elements in the communication system are not limited in embodiments of this application. For example, in communication systems of different standards, network elements may have other names. For another example, when a plurality of network elements are integrated into a same physical device, the physical device may alternatively have another name.

The following describes the passive internet of things to which embodiments of this application are applicable.

The passive internet of things (Passive IoT, P-IoT; or Ambient IoT, A-IoT) means that some network nodes in a network architecture are passive. These passive network nodes harvest energy from solar energy, radio frequency, wind energy, hydro energy, tidal energy, or in another manner. These nodes do not have power supply devices or do not depend on power supply devices such as batteries, but harvest energy from an environment to support device running such as data sensing, transmission, and distributed computing. These nodes may further store the harvested energy. As shown in FIG. 2A, a passive internet of things architecture may include a passive terminal, a reader (reader), and a server, and may be constructed based on the 5G communication systems shown in FIG. 1A and FIG. 1B or another communication system (such as an LTE communication system, a 6G communication system, and a future communication system).

The passive terminal may be in a tag form, or may be in any other terminal form. This is not limited. The reader (Reader) may be an access network device, for example, a base station, a pole station, a micro base station, or a macro base station. Alternatively, the reader may be a terminal device, for example, a mobile phone, an internet of things IoT device, or a handheld reader/writer.

Specifically, the reader performs non-contact bidirectional data communication in a wireless radio frequency manner, and reads or writes an electronic tag or a radio frequency card (Tag) in the wireless radio frequency manner, to identify a target and exchange data. There are two working modes: One working mode is that when the passive terminal enters an effective identification range of the reader, the passive terminal receives a radio frequency signal sent by the reader, and sends, by using energy harvested from an induced current, information (corresponding to an identifier of the passive terminal) stored in a chip. The other working mode is that the passive terminal may store some electric energy in a solar energy manner or the like, so that the passive terminal can actively send a signal of a frequency (in this case, the passive terminal may be referred to as a semi-passive terminal or a semi-active terminal), and the reader receives and decodes information, and then sends decoded information to a central information system for related data processing. The server may be an application function (Application Function, AF), an application server (Application Server, AS), a passive internet of things application function (P-IoT AF), or the like. This is not limited in this application.

Specifically, the server may send an instruction through a user plane channel or a control plane channel. This is not limited in this application.

A manner in which the server sends the instruction through the control plane channel includes: (1) The server directly sends the instruction to an AMF. (2) The server sends the instruction to the AMF via a control plane network element. The control plane network element may be the network exposure network element, the session management network element, the policy control network element, the data management network element, the NSSAAF network element, or the like in the embodiments in FIG. 1A and FIG. 1B.

A manner in which the server may send the instruction through the user plane channel includes: (1) The server sends the instruction to the reader via a user plane network element. (2) The server sends the instruction to the AMF via the user plane network element and an SMF network element, and the AMF sends the instruction to the passive terminal over a RAN. (3) The server sends the instruction to the reader (when the reader is a terminal device) via the user plane network element and an access network device (for example, the RAN).

The instruction sent by the server includes an operation type of an operation performed on the passive terminal. Specifically, the operation type includes obtaining data of the passive terminal, a message exchange operation, or the like.

Further, obtaining the data of the passive terminal may be an inventory operation, a read operation, or the like. The operation is used to obtain the data of the passive terminal, and the data may be identification data of the passive terminal or data stored in the passive terminal.

Further, the message exchange operation may include one or more of a read operation, a read operation, a write operation, a disable operation, or the like. Specifically, after receiving the instruction sent by the server, the reader performs information or message exchange with the passive terminal, and sends a message from the passive terminal to the server. The operation is mainly for the reader that does not view instruction content, and is only responsible for forwarding a message sent by the server to the passive terminal and a message sent by the passive terminal to the server. Therefore, in this scenario, the operation performed by the reader on the passive terminal may be understood as the message exchange operation on the passive terminal.

The following describes in detail the foregoing several operations on the passive terminal.

The inventory operation, also referred to as a stocktaking operation, that is, existing passive terminals are inventoried, and specifically, identifiers of the passive terminals are obtained. Each passive terminal has an identifier, and the identifier may be allocated by an enterprise or an operator. Generally, an instruction corresponding to the inventory operation includes information such as an identifier range of the passive terminal, a reader identifier, and location information.

The read operation is to read data from the passive terminal. The passive terminal may have a storage function, a storage area of the passive terminal may store data, and the read operation is to read data in the storage area of the passive terminal.

The write operation is to write data to the passive terminal. The server may send a write instruction, and the reader or a core network performs a write operation on the passive terminal according to the instruction, to write data into the storage area of the passive terminal.

The disable operation is used to invalidate or disable the passive terminal. The server may send a disable instruction, where the disable instruction may include an identifier of the passive terminal (that is, an identifier of the passive terminal that is expected to be disabled or invalidated). The reader or the core network performs an invalidation operation on the passive terminal according to the instruction. After the operation is completed, the passive terminal is invalidated or disabled, that is, inventory or another operation cannot be performed on the passive terminal.

FIG. 2B is a diagram of another architecture of a passive internet of things according to an embodiment of this application. As a further supplement to the architecture of the passive internet of things in FIG. 2A, compared with the architecture of the passive internet of things shown in FIG. 2A, the architecture of the passive internet of things shown in FIG. 2B further includes a control plane network element and an AMF. In other words, the passive internet of things shown in FIG. 2B is an example in which a server sends an instruction through a control plane channel.

This does not constitute a limitation on a manner in which the server sends the instruction in embodiments of this application.

The server in FIG. 2B may be an authentication, authorization, and accounting server (Authentication, Authorization, And Accounting Server, AAA Server), a passive internet of things application function (P-IoT AF), or the like. This is not limited in this application.

A specific manner in which the server sends the instruction through the control plane channel in FIG. 2B is as follows: The server sends the instruction to the AMF network element via a NEF network element or an NSSAAF network element.

The following uses an example to describe specific application scenarios to which the foregoing passive internet of things is applicable.
(1) Material storage or transportation: Goods are embedded with or attached with passive or semi-passive internet of things tags (in this case, the goods are equivalent to the foregoing passive terminals). Subsequently, in a process in which the goods are stored in a warehouse or undergo logistics, goods-related information may be automatically collected by a reader. An administrator may quickly query the goods information in a system, to reduce a risk of goods missing or theft, improve a goods handover speed, improve accuracy, and prevent unauthorized goods delivery and counterfeiting.
(2) Fixed asset management: In places with huge assets or valuable items, such as a library, an art museum, and a museum, complete management procedures or strict protection measures are needed. In this case, items in these places may be embedded with or attached with passive or semi-passive internet of things tags. When storage information of an item changes abnormally, a system immediately alerts an administrator, to handle the related situation and accurately manage the valuable items in such places.

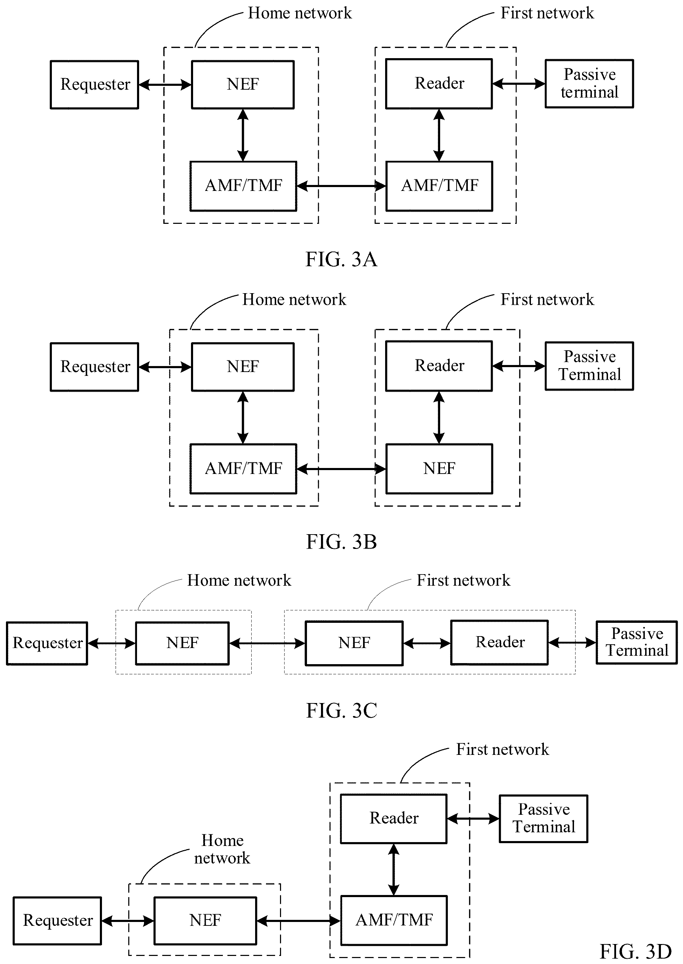

FIG. 3A to FIG. 3D show four network architectures in a roaming scenario according to an embodiment of this application. Each network architecture includes a home network of a passive terminal and a first network (that is, a visited network) that a requester requests to access.

As shown in FIG. 3A, the home network includes a NEF network element and an AMF/TMF network element, and the first network includes an AMF/TMF network element and a reader. In this architecture, when the requester operates the passive terminal, the AMF/TMF network element in the home network determines the first network that the requester requests to access, and then the AMF/TMF network element in the home network indicates the AMF/TMF network element in the first network to operate the passive terminal via the reader. Finally, the AMF/TMF network element in the first network determines the home network of the passive terminal, and sends related data to the requester over the home network.

As shown in FIG. 3B, the home network includes a NEF network element and an AMF/TMF network element, and the first network includes a NEF network element and a reader. In this architecture, when the requester operates the passive terminal, the AMF/TMF network element in the home network determines the first network that the requester requests to access, and then the AMF/TMF network element in the home network indicates the NEF network element in the first network to operate the passive terminal via the reader. Finally, the NEF network element in the first network determines the home network of the passive terminal, and sends related data to the requester over the home network.

As shown in FIG. 3C, the home network includes a NEF network element, and the first network includes a NEF network element and a reader. In this architecture, when the requester operates the passive terminal, the requester directly determines the first network to be accessed, and then indicates the NEF network element in the first network to operate the passive terminal via the reader. Finally, the NEF network element in the first network determines the home network of the passive terminal, and sends related data to the requester over the home network.

As shown in FIG. 3D, the home network includes a NEF network element, and the first network includes an AMF/TMF network element and a reader. In this architecture, when the requester operates the passive terminal, the requester directly determines the first network to be accessed, and then the requester indicates the AMF/TMF network element in the first network to operate the passive terminal via the reader. Finally, the AMF/TMF network element in the first network determines the home network of the passive terminal, and sends related data to the requester over the home network.

In the foregoing four architectures, the requester may be an enterprise or an individual user, and an implementation form may be an AF network element, a server, or the like. This is not limited in this application.

In addition, in the foregoing four network architectures, although the requester sends an instruction through a control plane channel, this does not constitute a limitation on a manner in which the requester sends the instruction. The AF or the server corresponding to the requester may alternatively send the instruction through the user plane channel described in the foregoing embodiment.

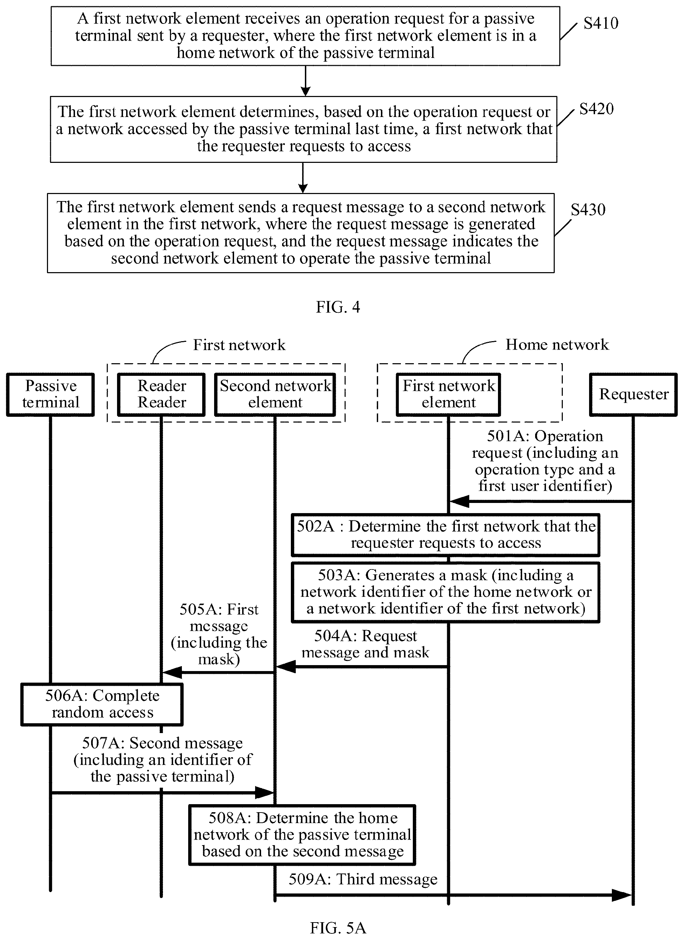

FIG. 4 is a schematic flowchart of a communication method according to an embodiment of this application, which is applicable to the network architectures shown in FIG. 3A and FIG. 3B. As shown in FIG. 4, the method includes step S410, step S420, and step S430.

Step S410: A first network element receives an operation request for a passive terminal sent by a requester, where the first network element is in a home network of the passive terminal. Specifically, the first network element may receive, through a control plane channel or a user plane channel, the operation request for the passive terminal sent by the requester.

The operation request includes an operation type for the passive terminal and a first user identifier. The first user identifier indicates an enterprise to which the passive terminal belongs. Optionally, the operation request further includes one or more of a geographical location of the passive terminal, an identifier of the passive terminal, or route data of the passive terminal. Optionally, the geographic location of the passive terminal may be represented by using a coordinate value, latitude and longitude, a tracking area list (Tracking Area List, TAI), or the like. Optionally, the identifier of the passive terminal includes one or more of a network identifier list, a second user identifier, or a sequence number. The network identifier list includes a network identifier of one or more networks that the passive terminal is authorized to access, the second user identifier indicates a requester that is authorized to operate the passive terminal, and the sequence number is an electronic product code (Electronic Product Code, EPC), a tag identifier (Tag Identifier, TID), a mobile subscriber identification number (Mobile subscriber identification number, MSIN), or the like.

Optionally, the network identifier may be represented by using a public land mobile network (Public Land Mobile Network, PLMN), a network identification (Network Identification, NID), or an identifier of another type. This is not limited in this application.

Optionally, the network identifier list may be constructed in one of the following two manners.
(1) [Network identifier list for sorting, based on an access priority, networks authorized to access]
(2) [Network identifier of the home network] [Network identifier list of other networks authorized to access]

In the first construction manner, all networks that the passive terminal is authorized to access are sorted based on the access priority, to obtain a network identifier list, where the home network of the passive terminal has a highest access priority. In the second construction manner, the network identifier of the home network of the passive terminal is separately constructed into a list, and then network identifiers of other networks that the passive terminal is authorized to access are constructed into a list, where the network identifiers in the list may be sorted or not sorted based on an access priority.

It should be noted that the foregoing two manners of constructing the network identifier list are merely two specific examples provided in this application, and do not constitute a limitation on a specific manner of constructing the network identifier list.

Further, the identifier of the passive terminal may further include one or more of a subscription permanent identifier type (Subscription Permanent Identifier Type, SUPI Type), an assignment mode (Assignment Mode), and an identifier category (Category).

The operation request may include an identifier of one or more passive terminals.

Optionally, the route data of the passive terminal includes at least one behavior rule list, and each behavior rule list includes one or more of a time period, a geographical location of the passive terminal within the time period, and an operation type of an operation performed on the passive terminal within the time period.

Table 1 is an example of the route data of the passive terminal provided in this application. As shown in Table 1, a passive terminal numbered 001 includes two behavior rule lists, and each behavior rule list includes a time period, a geographical location of the passive terminal within the time period, and an operation type of an operation performed on the passive terminal within the time period. A first behavior rule list in Table 1 indicates that, within 17:00-18:00, the passive terminal is located in a campus A, and an operation type for the passive terminal is an inventory operation. A second behavior rule list indicates that, within 18:00-19:00, the passive terminal is located in a campus B, and an operation type for the passive terminal is a read operation.

**Table 1 Service data table of a passive terminal**

| Number of the passive terminal | Time | Geographical location | Operation type |
|---|---|---|---|
| 001 | 17:00-18:00 | Campus A (coordinate value, latitude and longitude, and the like) | Inventory |
| | 18:00-19:00 | Campus B (coordinate value, latitude and longitude, and the like) | Read |

Step S420: The first network element determines, based on the operation request or a network accessed by the passive terminal last time, a first network that the requester requests to access.
(1) When the first network element determines, based on the operation request, the first network that the requester requests to access, the first network element may perform determining in one of the following manners.

Manner 1: The first network element determines, as the first network based on a mapping relationship between a geographical location and a network, a network corresponding to the geographical location of the passive terminal.

Specifically, in this manner, the network corresponding to the geographical location of the passive terminal is searched for based on the mapping relationship, and an intersection of a found network and the network included in the network identifier list in the identifier of the passive terminal is determined as the first network. In the mapping relationship between the geographical location and the network, each geographical location corresponds to one or more networks.

Optionally, the geographical location of the passive terminal may be known to the requester, and in this case, a corresponding scenario is that the requester performs a cross-network operation on the passive terminal at the known geographical location, or the geographical location of the passive terminal may be obtained from the route data of the passive terminal.

Manner 2: The first network element determines, based on a mapping relationship between an identifier of a passive terminal and a base station, one or more base stations corresponding to the identifier of the passive terminal, and uses, as the first network, a network corresponding to the one or more base stations. In the mapping relationship between the identifier of the passive terminal and the base station, an identifier of each passive terminal corresponds to one or more base stations.

Optionally, the network corresponding to the one or more base stations is a network configured for each of the one or more base stations.

(2) When the first network element determines, based on the network accessed by the passive terminal last time, the first network that the requester requests to access, the first network element determines, as the first network, the network accessed by the passive terminal last time.

It should be understood that there is a roaming service agreement, for example, a service agreement (service agreement, SLA), between the first network and the home network of the passive terminal. Optionally, after the first network element confirms the first network, the first network element stores a network identifier of the first network, or sends a network identifier of the first network to a third network element for storage.

Optionally, the third network element is a unified data repository function UDR network element or a unified data management function UDM network element in the home network.

When the first network element stores the network identifier of the first network, the network identifier of the first network may be stored in a context Context of the passive terminal. Optionally, before the first network element performs the following step S430, the first network element further confirms that the passive terminal has subscribed to the first network. Specifically, the first network element first obtains subscription data, and confirms that the network identifier of the first network is in a network identifier list included in the subscription data, and then the first network element performs step S430.

The subscription data includes a network identifier list of networks that the requester is authorized to use.

Step S430: The first network element sends a request message to a second network element in the first network, where the request message is generated based on the operation request, and the request message indicates the second network element to operate the passive terminal. Specifically, the request message includes the identifier of the passive terminal.

Optionally, the request message further includes one or more of a mask, the first user identifier, the geographical location of the passive terminal, or the operation type.

When the request message does not include the operation type, it may be considered in this case that the operation performed by the requester on the passive terminal is inventory.

The second network element is a network element that has a capability of managing the passive terminal in the first network.

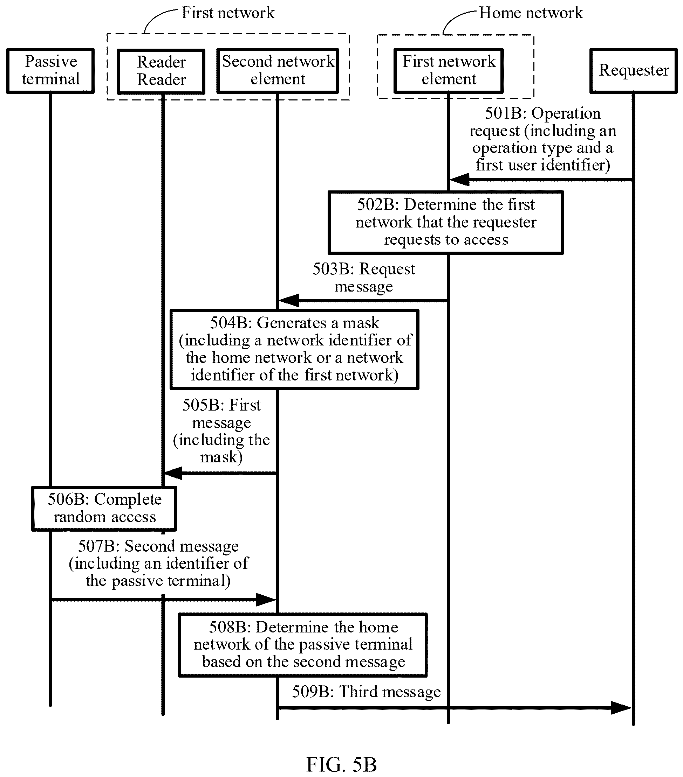

Specifically, the operation performed by the second network element on the passive terminal includes: The second network element indicates a reader to perform random access with the passive terminal, and after completing random access, receives a message sent by the passive terminal via the reader, and the like, which are specifically described in the following embodiments in FIG. 5A and FIG. 5B.

Optionally, the first network element is an access and mobility management function AMF network element or a tag management function TMF network element, and the second network element is an access and mobility management function AMF network element, a tag management function TMF network element, or a network exposure function NEF network element.

With reference to FIG. 5A and FIG. 5B, the following describes an interaction process between devices in the passive internet of things during implementation of the communication method in FIG. 4, as further supplementary descriptions of the embodiment in FIG. 4. A difference between

FIG. 5A and FIG. 5B lies in that FIG. 5A is used to describe a scenario in which a first network element in a home network generates a mask, and FIG. 5B is used to describe a scenario in which a second network element in a first network generates a mask.

The following describes an interaction procedure between devices in FIG. 5A.

Step 501A: A requester sends an operation request (including an operation type and a first user identifier) to a first network element.

Specifically, for specific content included in the operation request, refer to related descriptions in the embodiment in FIG. 4. Details are not described herein again.

Step 502A: The first network element determines a first network that the requester requests to access.

Specifically, for a manner in which the first network element determines the first network of the passive terminal, refer to related descriptions in the embodiment in FIG. 4. Details are not described herein again.

Step 503A: The first network element generates a mask (including a network identifier of a home network or a network identifier of the first network).

Specifically, the first network element generates the mask based on one or more of the operation request, the network identifier of the home network, and the network identifier of the first network. The mask includes the network identifier of the home network or the network identifier of the first network.

Further, optionally, the mask further includes the first user identifier and/or an identifier range of the passive terminal.

The first user identifier indicates the requester. The identifier range of the passive terminal is generated based on an identifier of the passive terminal in the operation request, and indicates a range of the identifier of the passive terminal that the requester requests to operate.

For example, if sequence numbers included in identifiers of a plurality of passive terminals that the requester requests to operate are consecutive (for example, 0-8), a binary identifier range may be generated based on the sequence numbers.

Further, optionally, the identifier range of the passive terminal may be generated based on an EPC code, a TID code, or another identifier in the identifier of the passive terminal. This is not limited in this application. In addition, the identifier range of the passive terminal may be a range or a specific value.

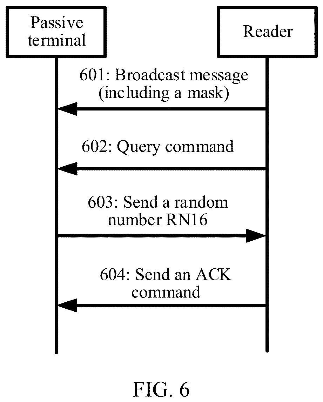

When the passive terminal subsequently receives a broadcast message that includes the mask and that is sent by a reader, the passive terminal determines, based on content in the mask, whether to perform random access (a specific determining process is described in the embodiment in FIG. 6 below), to implement screening of passive terminals that need to be operated within a coverage area of the reader.

Step 504A: The first network element sends a request message and the mask to a second network element.

Specifically, the first network element sends the request message and the mask to the second network element having a capability of managing the passive terminal in the first network.

Step 505A: The second network element sends a first message (including the mask) to the reader. Specifically, the first message is generated based on the request message and the mask. Optionally, for the first message, the reader may sense or not sense an operation type included in the first message. This is not limited in this application.

It should be noted herein that the second network element determines, from the reader in the first network based on the coverage area of the reader in the first network, a reader that can cover an operation area requested by the requester, and then sends the first message to the reader.

Step 506A: The passive terminal completes random access to the reader.

Specifically, FIG. 6 shows an example of a random access procedure according to an embodiment of this application.

As shown in FIG. 6, after receiving the first message, the reader generates a broadcast message including the mask, and then performs step 601: Send the broadcast message (including the mask) to the passive terminal. In addition, after performing step 601, the reader performs step 602: Send a query command. In addition, the passive terminal performs step 603: Send a random number RN16 to the reader. After receiving the random number RN16 sent by the passive terminal, the reader performs step 604: Send an ACK command, where the command includes the random number RN16 just received. After receiving the ACK command and verifying that the random number RN16 in the command is correct, the passive terminal feeds back an EPC code and the like of the passive terminal to the reader, to complete the random access procedure.

Optionally, when the mask includes the network identifier of the first network, after monitoring the broadcast message sent by the reader, the passive terminal determines whether the network identifier list included in the identifier of the passive terminal includes the network identifier of the first network. If the network identifier list included in the identifier of the passive terminal includes the network identifier of the first network, the passive terminal completes random access to the reader; or if the network identifier list included in the identifier of the passive terminal does not include the network identifier of the first network, the passive terminal does not perform the random access procedure.

Optionally, when the broadcast message includes an identifier range (the identifier range may be included in the mask) of the passive terminal that the requester requests to operate, after monitoring the broadcast message, the passive terminal determines whether the identifier of the passive terminal belongs to the identifier range of the passive terminal. If the identifier of the passive terminal belongs to the identifier range of the passive terminal, the passive terminal completes random access to the reader; or if the identifier of the passive terminal does not belong to the identifier range of the passive terminal, the passive terminal does not perform the subsequent random access procedure.

Optionally, if the identifier of the passive terminal includes a second user identifier, and the broadcast message includes the first user identifier, after the passive terminal monitors the broadcast message sent by the reader, the passive terminal compares the first user identifier indicating the requester with the second user identifier, and if the first user identifier is the same as the second user identifier or a second user identifier list includes the first user identifier, completes random access; or if the first user identifier is different from the second user identifier or a second user identifier list does not include the first user identifier, the passive terminal does not perform the subsequent random access procedure.

The second user identifier in this embodiment of this application may be one user identifier or the second user identifier list including a plurality of user identifiers.

Step 507A: The passive terminal sends a second message (including the identifier of the passive terminal) to the second network element via a reader.

The second message includes the identifier of the passive terminal and/or the network identifier of the home network.

Optionally, when the mask includes the network identifier of the first network, the second message may further include an indication message. The indication message indicates that the network identifier included in the mask is different from the network identifier of the home network. Step 508A: The second network element determines the home network of the passive terminal based on the second message.

Specifically, the second network element may determine the home network of the passive terminal based on the second message in the following several manners.
(1) The second network element determines, as the home network of the passive terminal based on a mapping relationship between a user identifier and a home network, a home network corresponding to a second user identifier in the second message, where the second user identifier indicates a requester that is authorized to operate the passive terminal.
   Specifically, when the identifier of the passive terminal includes the second user identifier, the second network element may read the second user identifier from the second message, find, based on the mapping relationship between the user identifier and the home network, the home network corresponding to the second user identifier, and use the found home network as the home network of the passive terminal.
(2) The second network element determines, based on a mapping relationship between a terminal identifier and a home network, a home network corresponding to the identifier of the passive terminal in the second message.
   Specifically, the second network element searches, based on the mapping relationship between the terminal identifier and the home network, for the home network corresponding to the identifier of the passive terminal in the second message, and uses the found home network as the home network of the passive terminal.
(3) If the second message includes the network identifier of the home network, the second network element may directly identify the home network corresponding to the network identifier.
(4) The second network element determines, based on a mapping relationship between a tunnel identifier and a user identifier, a first user identifier corresponding to a tunnel carrying the second message, and determines, as the home network of the passive terminal based on a mapping relationship between a user identifier and a home network, a home network corresponding to the first user identifier, where the first user identifier indicates the requester.

Specifically, each requester corresponds to a tunnel used for message exchange between the second network element and the reader, that is, the mapping relationship between the tunnel identifier and the user identifier (indicating the requester). The second message is generated based on the operation request sent by the requester indicated by the first user identifier.

The mapping relationship between the user identifier and the home network is a pre-established mapping relationship.

Optionally, before the second network element confirms the home network of the passive terminal by using the foregoing steps and sends the third message to the requester, the second network element confirms that the requester indicated by the first user identifier is authorized to operate the passive terminal. If the requester is authorized to operate the passive terminal, the second network element performs the following step 509A; or if the requester is not authorized to operate the passive terminal, the second network element does not perform the following step 509A. Specifically, the step in which the second network element confirms that the requester indicated by the first user identifier is authorized to operate the passive terminal is as follows:
If the identifier of the passive terminal does not include the second user identifier, in this case, the second message does not include the second user identifier, that is, in the random access procedure between the passive terminal and the reader, the first user identifier indicating the requester is not compared with the second user identifier. In this case, the second network element may obtain subscription data, where the subscription data includes a user identifier list corresponding to the requester that is authorized to operate the passive terminal. In this case, the second network element determines whether the user identifier list includes the first user identifier. If the user identifier list includes the first user identifier, the second network element confirms that the requester is authorized to operate the passive terminal; or if the user identifier list does not include the first user identifier, the second network element confirms that the requester indicated by the first user identifier is not authorized to operate the passive terminal.

Further, optionally, a manner in which the second network element obtains the subscription data may be obtaining the subscription data from a UDM or UDR network element in the home network via a security edge protection proxy (Security Edge Protection Proxy, SEPP).

Step 509A: The second network element sends the third message to the requester over the home network.

The third message is generated in response to the request message. Specifically, for different request messages, devices/network elements that generate the third message may be different.

For example, when the operation type included in the request message is a read operation, an entity for generating the third message is the passive terminal. In this case, the third message may be carried in the second message and sent to the second network element, or may be separately sent by the passive terminal to the second network element. This is not limited in this application. For another example, when the operation type included in the request message is an inventory operation, the third message is identification data generated based on the identifier of the passive terminal. In this case, the third message may be generated by the second network element based on the received second message.

The following describes an interaction procedure between devices in FIG. 5B.

Step 501B: A requester sends an operation request (including an operation type and a first user identifier) to a first network element.

Specifically, for specific content included in the operation request, refer to related descriptions in the embodiment in FIG. 4. Details are not described herein again.

Step 502B: The first network element determines a first network that the requester requests to access.

Specifically, for a manner in which the first network element determines the first network that the requester requests to access, refer to related descriptions in the embodiment in FIG. 4. Details are not described herein again.

Step 503B: The first network element sends a request message to a second network element in the first network.

Step 504B: The second network element generates a mask (including a network identifier of a home network or a network identifier of the first network).

Specifically, the second network element generates the mask based on one or more of the request message, the network identifier of the home network, and the network identifier of the first network.

The mask includes the network identifier of the home network or the network identifier of the first network.

Step 505B: The second network element sends a first message (including the mask) to the reader. Step 506B: The passive terminal completes random access to a reader.

Step 507B: The passive terminal sends a second message (including an identifier of the passive terminal) to the second network element via a reader.

Step 508B: The second network element determines the home network of the passive terminal based on the second message.

Step 509B: The second network element sends a third message to the requester.

Specifically, a difference between FIG. 5B and FIG. 5A lies in that network elements for generating the mask are different. For specific implementations of other necessary or optional steps in FIG. 5B, refer to corresponding processes in FIG. 4, FIG. 5A, and FIG. 6. Details are not described herein again.

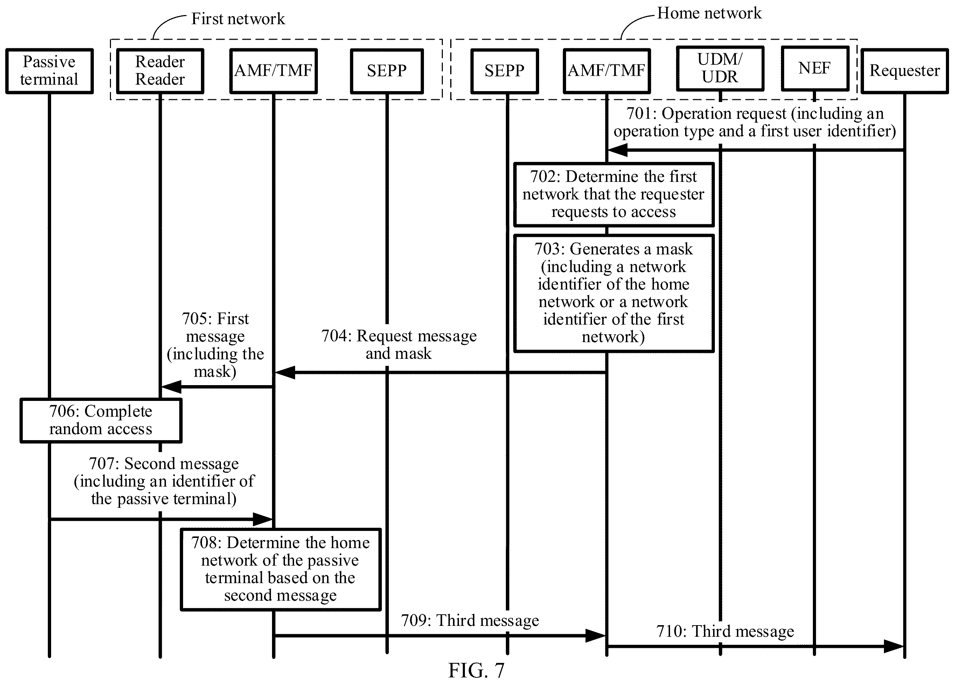

FIG. 7 shows a specific example of a passive internet of things for implementing a communication method in this application according to an embodiment of this application, which is obtained based on the architecture shown in FIG. 3A and the procedure shown in FIG. 5A.

In the specific example in FIG. 7, a requester sends an instruction through a control plane channel. An AMF/TMF in a home network in FIG. 7 corresponds to the first network element in FIG. 5A. In other words, a function of the first network element in FIG. 5A is implemented by the AMF/TMF network element in the home network in FIG. 7. The AMF/TMF in a first network in FIG. 7 corresponds to the second network element in FIG. 5A. In other words, a function of the second network element in FIG. 5A is implemented by the AMF/TMF network element in the first network in FIG. 7. In addition to the AMF/TMF in the foregoing embodiment, a home network side further includes a UDM/UDR network element, a NEF network element, and a SEPP network element. In addition to a reader and the AMF/TMF, the first network further includes a SEPP network element.

A procedure of the communication method shown in FIG. 7 is as follows:
Step 701: The requester sends an operation request (including an operation type and a first user identifier) to the AMF/TMF network element via the NEF.

Step 702: The AMF/TMF in the home network determines the first network that the requester requests to access.

Step 703: The AMF/TMF in the home network generates a mask (including a network identifier of the home network or a network identifier of the first network).

Step 704: The AMF/TMF in the home network sends a request message and the mask to the AMF/TMF in the first network via the SEPP.

Step 705: The AMF/TMF in the first network sends a first message (including the mask) to the reader.

Step 706: The passive terminal completes random access to the reader.

Step 707: The passive terminal sends a second message (including an identifier of the passive terminal) to the AMF/TMF in the first network via the reader.

Step 708: The AMF/TMF in the first network determines the home network of the passive terminal based on the second message.

Step 709: The AMF/TMF in the first network sends a third message to the AMF/TMF in the home network.

Step 710: The AMF/TMF in the home network sends the third message to the requester. Specifically, for a specific implementation process of the foregoing steps, refer to corresponding descriptions in the embodiments in FIG. 4, FIG. 5A, and FIG. 6. Details are not described herein again. In addition, the embodiment in FIG. 7 may further include optional steps in the embodiments in FIG. 4, FIG. 5A, and FIG. 6.

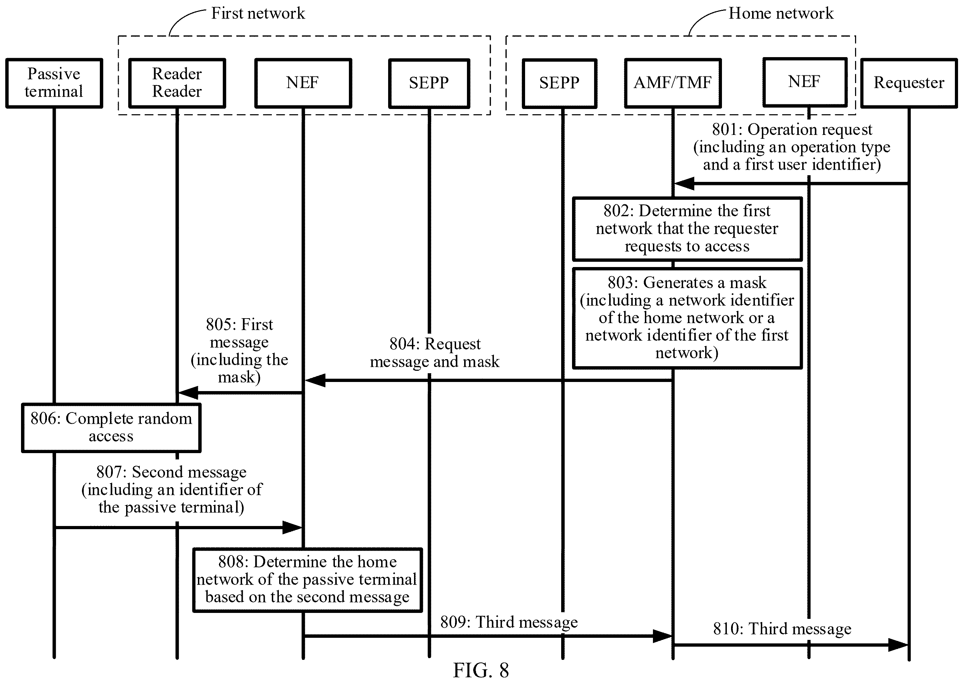

FIG. 8 shows another specific example of a passive internet of things for implementing a communication method in this application according to an embodiment of this application, which is obtained based on the architecture shown in FIG. 3B and the procedure shown in FIG. 5A.

In the specific example in FIG. 8, a requester also sends an instruction through a control plane channel. An AMF/TMF in a home network in FIG. 8 corresponds to the first network element in FIG. 5A. In other words, a function of the first network element in FIG. 5A is implemented by the AMF/TMF network element in the home network in FIG. 8. A NEF network element in a first network in FIG. 8 is corresponding to the second network element in FIG. 5A. In other words, a function of the second network element in FIG. 5A is implemented by the NEF network element in the first network in FIG. 7. In addition to the AMF/TMF in the foregoing embodiment, a home network side further includes a NEF network element and a SEPP network element. In addition to a reader and the NEF, the first network further includes a SEPP network element.

A procedure of the communication method shown in FIG. 8 is as follows:
Step 801: The requester sends an operation request (including an operation type and a first user identifier) to the AMF/TMF network element via the NEF.

Step 802: The AMF/TMF in the home network determines the first network that the requester requests to access.

Step 803: The AMF/TMF in the home network generates a mask (including a network identifier of the home network or a network identifier of the first network).

Step 804: The AMF/TMF in the home network sends a request message and the mask to the NEF in the first network via the SEPP.

Step 805: The NEF in the first network sends a first message (including the mask) to the reader. Step 806: The passive terminal completes random access to the reader.

Step 807: The passive terminal sends a second message (including an identifier of the passive terminal) to the NEF in the first network via the reader.

Step 808: The NEF in the first network determines the home network of the passive terminal based on the second message.

Step 809: The NEF in the first network sends a third message to the AMF/TMF in the home network.

Step 810: The AMF/TMF in the home network sends the third message to the requester. Specifically, for a specific implementation process of the foregoing steps, refer to corresponding descriptions in the embodiments in FIG. 4, FIG. 5A, and FIG. 6. Details are not described herein again. In addition, the embodiment in FIG. 8 may further include optional steps in the embodiments in FIG. 4, FIG. 5A, and FIG. 6.

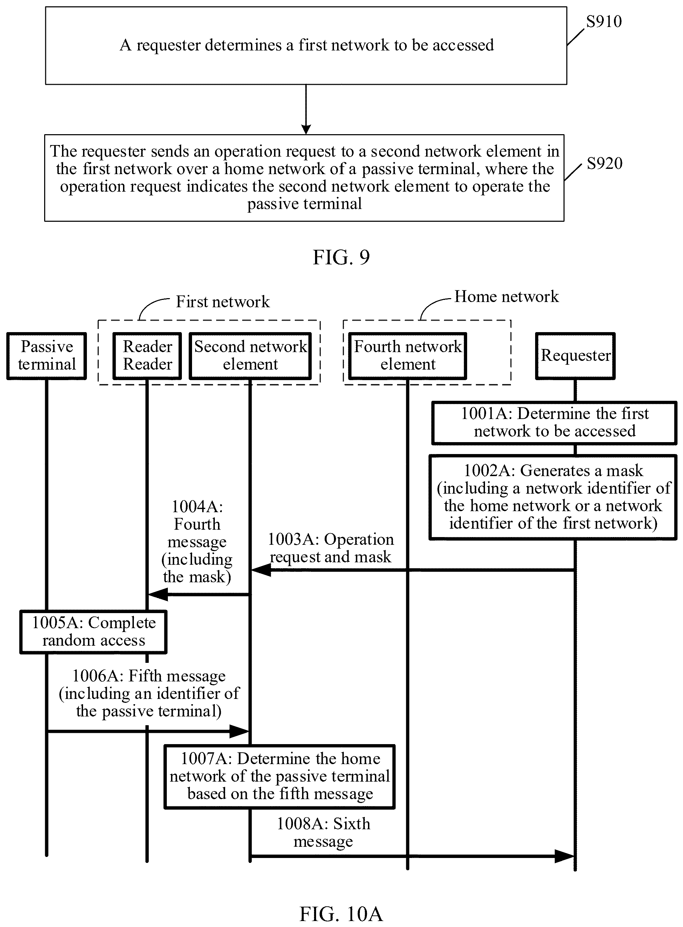

FIG. 9 is a schematic flowchart of another communication method according to an embodiment of this application, which is applicable to the network architectures shown in FIG. 3C and FIG. 3D. As shown in FIG. 9, the method includes step S910 and step S920.

Step S910: A requester determines a first network to be accessed.

Specifically, the requester may determine, in the following manners, the first network to be accessed.
(1) The requester determines the first network from one or more networks, where the one or more networks are networks that the requester is authorized to use.
   Specifically, the one or more networks are networks that an operator authorizes the requester to use.
(2) The first network element determines, based on a mapping relationship between an identifier of a passive terminal and a base station, one or more base stations corresponding to the identifier of the passive terminal, and uses, as the first network, a network corresponding to the one or more base stations. In the mapping relationship between the identifier of the passive terminal and the base station, an identifier of each passive terminal corresponds to one or more base stations.

Optionally, the network corresponding to the one or more base stations is a network configured for each of the one or more base stations.

Step S920: The requester sends an operation request to a second network element in the first network over a home network of the passive terminal, where the operation request indicates the second network element to operate the passive terminal.

Specifically, the operation performed by the second network element on the passive terminal includes: The second network element indicates a reader to perform random access with the passive terminal, and after completing random access, receives a message sent by the passive terminal via the reader, and the like. For details, refer to descriptions in the embodiments in FIG. 5A and FIG. 5B.

For specific content included in the operation request, refer to descriptions in the embodiment in FIG. 4. Details are not described herein again.

Optionally, the second network element is an access and mobility management function AMF network element, a tag management function TMF network element, or a network exposure function NEF network element.

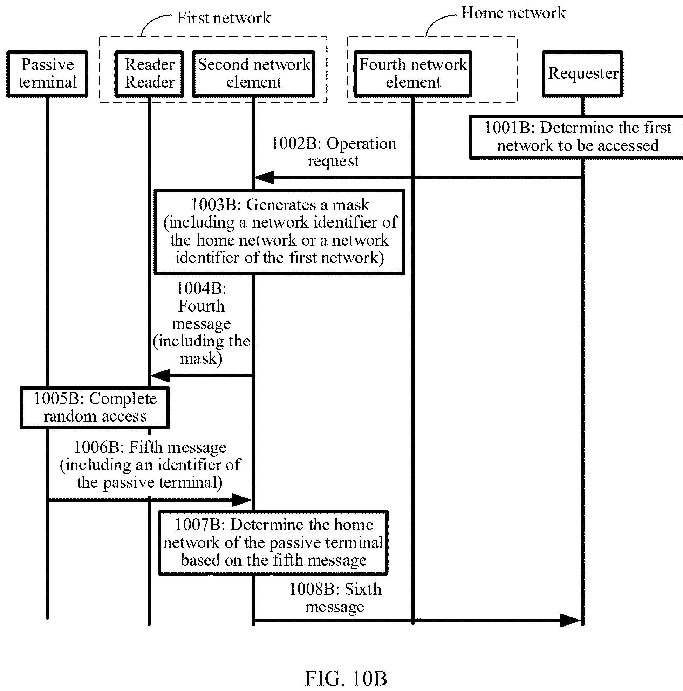

With reference to FIG. 10A and FIG. 10B, the following describes an interaction process between devices in the passive internet of things during implementation of the communication method in FIG. 9, as further supplementary descriptions of the embodiment in FIG. 9. A difference between

FIG. 10A and FIG. 10B lies in that FIG. 10A is used to describe a scenario in which a requester generates a mask, and FIG. 10B is used to describe a scenario in which a second network element in a first network generates a mask.

The following describes an interaction process between devices in FIG. 10A.

Step 1001A: A requester determines a first network to be accessed.

Specifically, for a manner in which the requester determines the first network, refer to related descriptions in the embodiment in FIG. 9. Details are not described herein again.

Step 1002A: The requester generates a mask (including a network identifier of a home network or a network identifier of the first network).

Specifically, for a process of generating the mask by the requester and content included in the mask, refer to descriptions in FIG. 4, FIG. 5A, and FIG. 5B. Details are not described herein again. Step 1003A: The requester sends an operation request and the mask to a second network element in the first network.

Specifically, for content included in the operation request, refer to related descriptions in the embodiment in FIG. 4. Details are not described herein again.

Step 1004A: The second network element sends a fourth message (including the mask) to a reader.

Specifically, the fourth message is generated based on the operation request. For content included in the fourth message, refer to descriptions of the second message in the foregoing embodiment. Step 1005A: A passive terminal completes random access to the reader.

Specifically, for the random access procedure, refer to descriptions in the embodiment in FIG. 6. Step 1006A: The passive terminal sends a fifth message (including an identifier of the passive terminal) to the second network element via the reader.

Specifically, the fifth message includes the identifier of the passive terminal and/or the network identifier of the home network.

Optionally, when the mask includes the network identifier of the first network, the fifth message may further include an indication message. The indication message indicates that the network identifier included in the mask is different from the network identifier of the home network.

For the identifier of the passive terminal, refer to descriptions in the embodiment in FIG. 4. Details are not described herein again.

Step 1007A: The second network element determines the home network of the passive terminal based on the fifth message.

Specifically, for this process, refer to corresponding descriptions in the embodiment in FIG. 5A. Details are not described herein again.

Step 1008A: The second network element sends a sixth message to the requester over the home network.

Specifically, for content of the sixth message, refer to descriptions of the third message in the foregoing embodiment.

In addition, FIG. 10A may further include optional steps in FIG. 5A. Details are not described herein again.

The following describes an interaction process between devices in FIG. 10B.

Step 1001B: A requester determines a first network to be accessed.

Specifically, for a manner in which the requester determines the first network, refer to related descriptions in the embodiment in FIG. 9. Details are not described herein again.

Step 1002B: The requester sends an operation request to a second network element in the first network.

Step 1003B: The second network element generates a mask (including a network identifier of a home network or a network identifier of the first network).

Step 1004B: The second network element sends a fourth message (including the mask) to a reader.

Step 1005B: A passive terminal completes random access to the reader.

Step 1006B: The passive terminal sends a fifth message (including an identifier of the passive terminal) to the second network element via the reader.

Step 1007B: The second network element determines the home network of the passive terminal based on the fifth message.

Step 1008B: The second network element sends a sixth message to the requester over the home network.

Specifically, a difference between FIG. 10B and FIG. 10A lies in that entities for generating the mask are different. For specific implementations of other necessary or optional steps in FIG. 10B, refer to corresponding processes in FIG. 9 and FIG. 10A. Details are not described herein again. A fourth network element in FIG. 10A and FIG. 10B is a NEF network element or another feasible network element. This is not limited in this application.

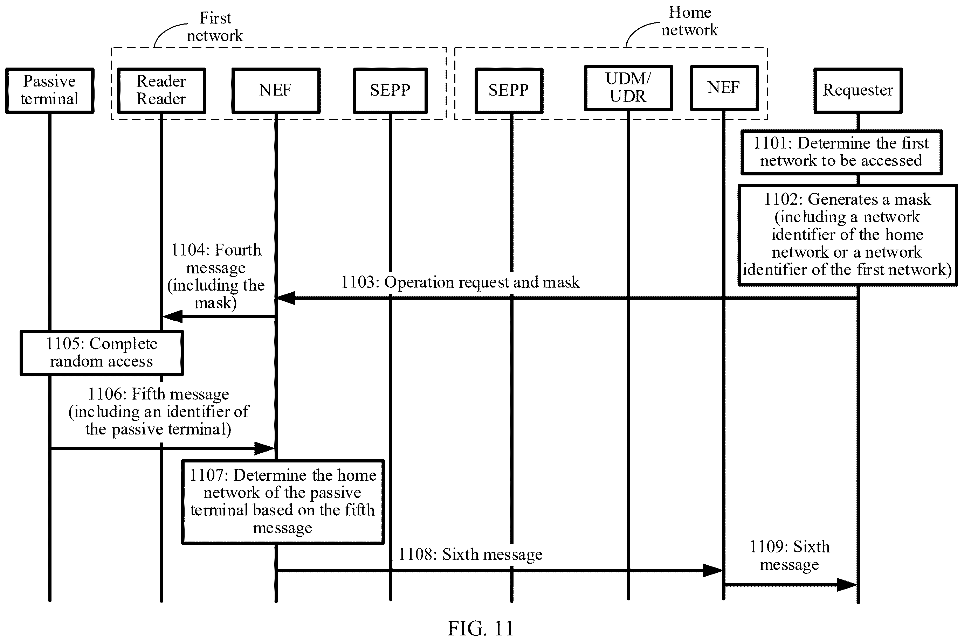

FIG. 11 shows a specific example of a passive internet of things for implementing a communication method in this application according to an embodiment of this application, which is obtained based on the architecture shown in FIG. 3C and the procedure shown in FIG. 10A.

In the specific example in FIG. 11, a requester sends an instruction through a control plane channel. A NEF network element in a home network in FIG. 11 corresponds to the fourth network element in FIG. 10A. In other words, a function of the fourth network element in FIG. 10A is implemented by the NEF network element in the home network in FIG. 11. A NEF network element in a first network in FIG. 11 is corresponding to the second network element in FIG. 10A. In other words, a function of the second network element in FIG. 10A is implemented by the NEF network element in the first network in FIG. 11. In addition to the NEF in the foregoing embodiment, a home network side further includes a UDM/UDR network element and a SEPP network element. In addition to a reader and the NEF, the first network further includes a SEPP network element.

A procedure of the communication method shown in FIG. 11 is as follows:
Step 1101: The requester determines a first network to be accessed.

Step 1102: The requester generates a mask (including a network identifier of the home network or a network identifier of the first network).

Step 1103: The requester sends an operation request and the mask to the NEF network element in the first network via the NEF network element in the home network.

Step 1104: The NEF in the first network sends a fourth message (including the mask) to the reader. Step 1105: A passive terminal completes random access to the reader.

Step 1106: The passive terminal sends a fifth message (including an identifier of the passive terminal) to the NEF in the first network via the reader.

Step 1107: The NEF in the first network determines the home network of the passive terminal based on the fifth message.

Step 1108: The NEF in the first network sends a sixth message to the NEF network element in the home network.

Step 1109: The NEF in the home network sends the sixth message to the requester.

Specifically, for a specific implementation process of the foregoing steps, refer to corresponding descriptions in FIG. 9 and FIG. 10A. Details are not described herein again. In addition, the embodiment in FIG. 11 may further include optional steps in the embodiments in FIG. 9 and FIG. 10A.

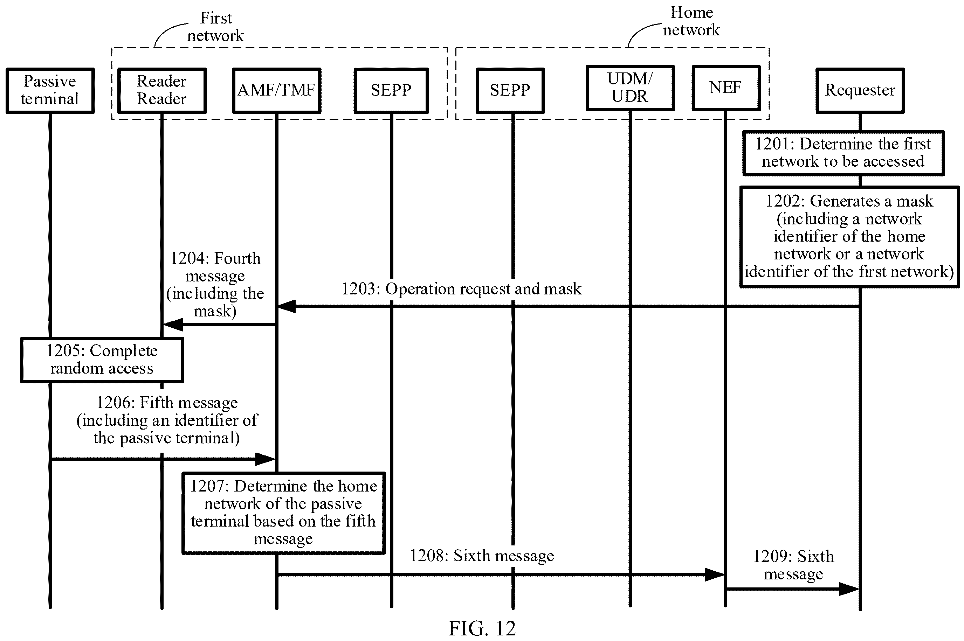

FIG. 12 shows another specific example of a passive internet of things for implementing a communication method in this application according to an embodiment of this application, which is obtained based on the architecture shown in FIG. 3D and the procedure shown in FIG. 10A.

In the specific example in FIG. 12, a requester also sends an instruction through a control plane channel. A NEF in a home network in FIG. 12 corresponds to the fourth network element in FIG. 10A. In other words, a function of the fourth network element in FIG. 10A is implemented by the NEF network element in the home network in FIG. 12. An AMF/TMF network element in a first network in FIG. 12 corresponds to the second network element in FIG. 10A. In other words, a function of the second network element in FIG. 10A is implemented by the AMF/TMF network element in the first network in FIG. 12. In addition to the NEF network element, a home network side further includes a UDM/UDR network element and a SEPP network element. In addition to a reader and the AMF/TMF, the first network further includes a SEPP network element.

A procedure of the communication method shown in FIG. 12 is as follows:
Step 1201: The requester determines a first network to be accessed.

Step 1202: The requester generates a mask (including a network identifier of the home network or a network identifier of the first network).

Step 1203: The requester sends an operation request and the mask to the AMF/TMF in the first network via the NEF network element in the home network.

Step 1204: The AMF/TMF in the first network sends a fourth message (including the mask) to the reader.

Step 1205: A passive terminal completes random access to the reader.

Step 1206: The passive terminal sends a fifth message (including an identifier of the passive terminal) to the AMF/TMF in the first network via the reader.

Step 1207: The AMF/TMF in the first network determines the home network of the passive terminal based on the fifth message.

Step 1208: The AMF/TMF in the first network sends a sixth message to the NEF network element in the home network.

Step 1209: The NEF in the home network sends the sixth message to the requester.

Specifically, for a specific implementation process of the foregoing steps, refer to corresponding descriptions in FIG. 9 and FIG. 10A. Details are not described herein again. In addition, the embodiment in FIG. 12 may further include optional steps in the embodiments in FIG. 9 and FIG. 10A.

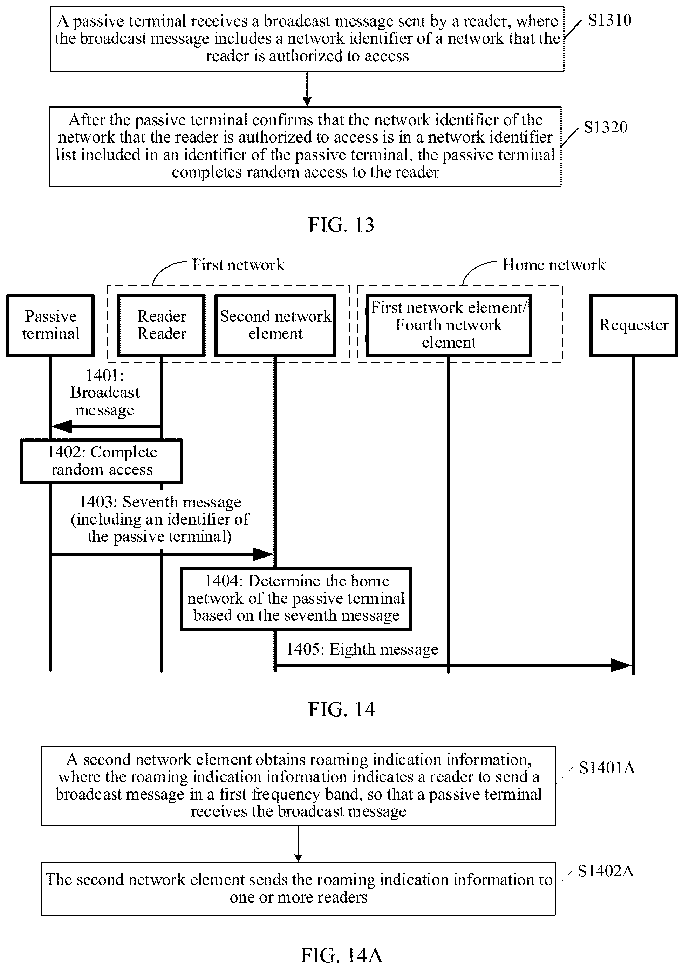

FIG. 13 is a schematic flowchart of still another communication method according to an embodiment of this application, which is used to describe a procedure in which a passive terminal actively initiates a service request (that is, the passive terminal actively reports corresponding data). The foregoing embodiments in FIG. 4 to FIG. 12 all describe a process in which a requester actively initiates a service request over a home network (that is, the requester searches for a passive terminal in a downlink over the home network and a visited network, and then the passive terminal reports corresponding data).

The embodiment in FIG. 13 includes the following steps.

Step S1310: The passive terminal receives a broadcast message sent by a reader, where the broadcast message includes a network identifier of a network that the reader is authorized to access. Step S1320: After the passive terminal confirms that the network identifier of the network that the reader is authorized to access is in a network identifier list included in an identifier of the passive terminal, the passive terminal completes random access to the reader.

For composition of the identifier of the passive terminal, refer to descriptions in the embodiment in FIG. 4. Details are not described herein again.

Specifically, after receiving the broadcast message, the passive terminal determines whether the network identifier list in the identifier of the passive terminal includes the identifier of the network that the reader is authorized to access. If the network identifier list in the identifier of the passive terminal includes the identifier of the network that the reader is authorized to access, the passive terminal completes random access to the reader; or if the network identifier list in the identifier of the passive terminal does not include the identifier of the network that the reader is authorized to access, the passive terminal does not complete random access to the reader. For a specific random access procedure, refer to descriptions in the embodiment in FIG. 6.

After the passive terminal completes random access to the reader, the passive terminal sends a seventh message to a second network element via the reader.

The seventh message includes the identifier of the passive terminal and/or a network identifier of a home network.

The second network element is in a first network, and the first network is a network that the passive terminal is authorized to access.

It should be noted that the communication method in FIG. 13 is applicable to any one of the foregoing architectures in FIG. 3A to FIG. 3D.

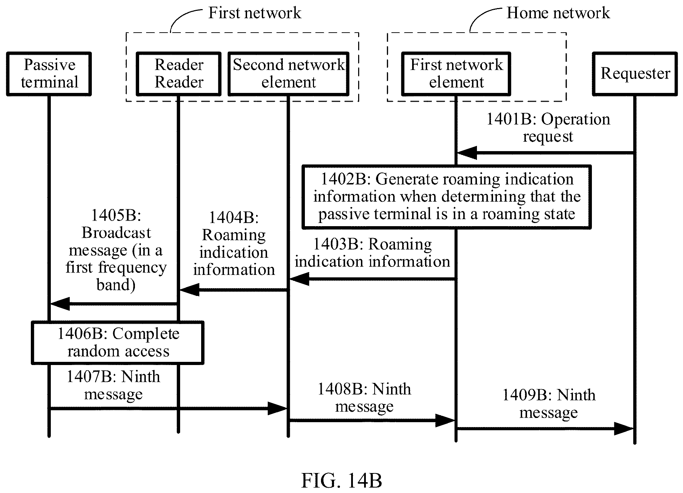

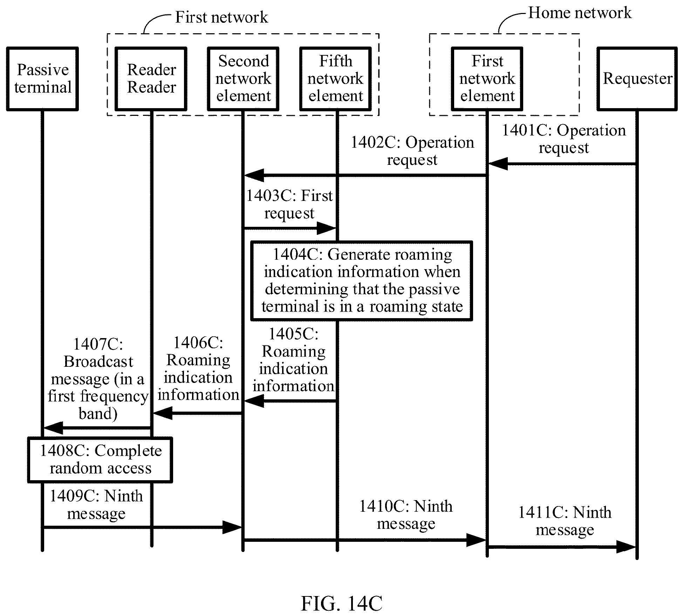

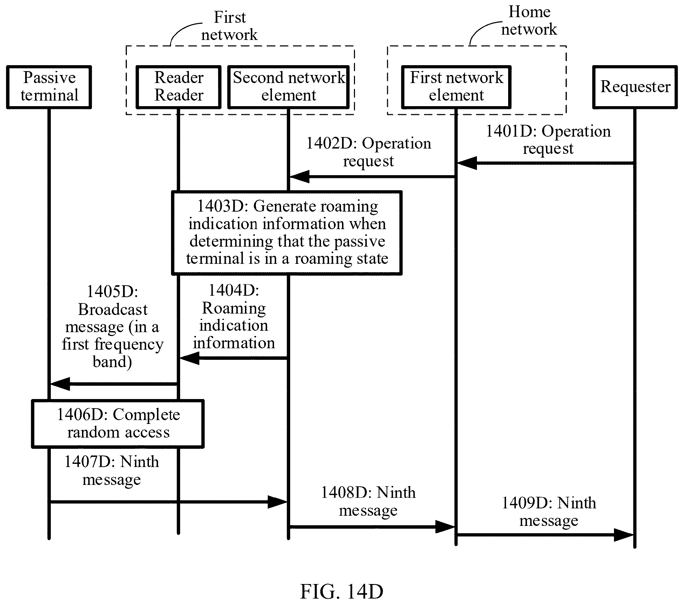

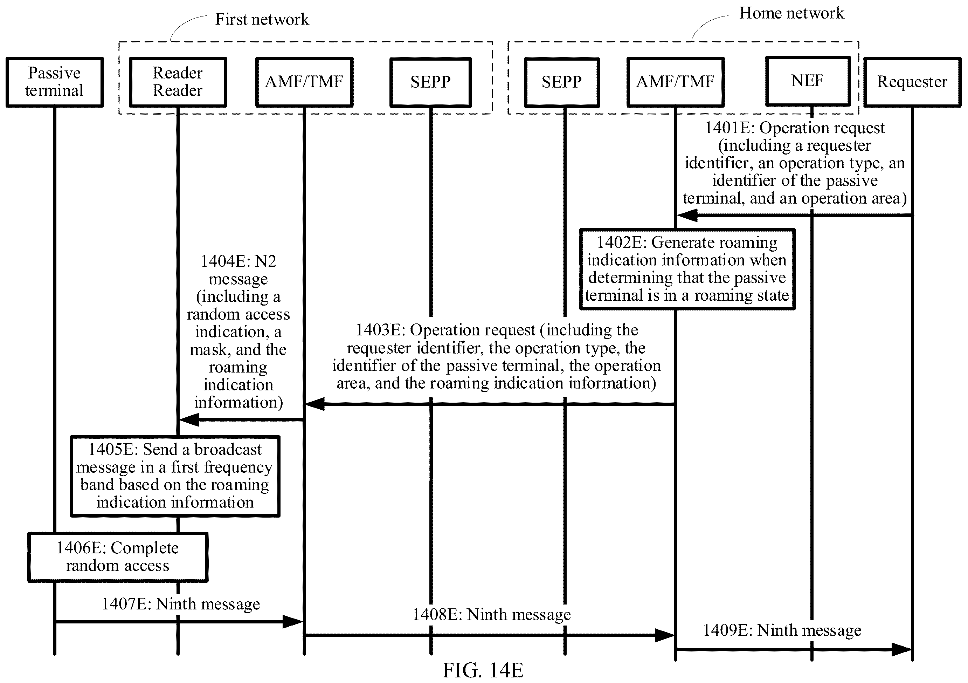

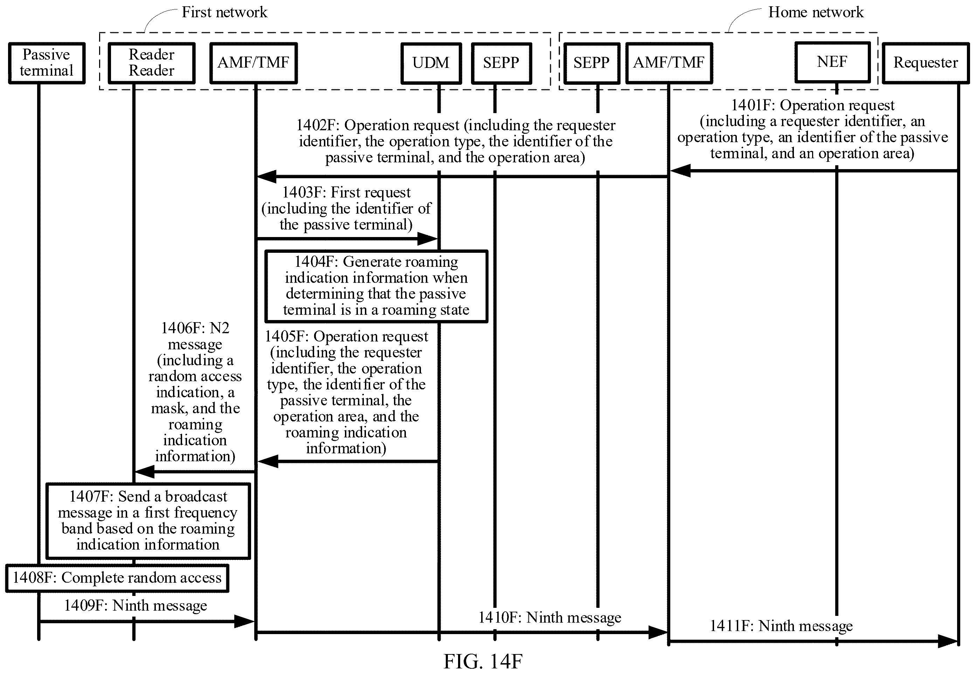

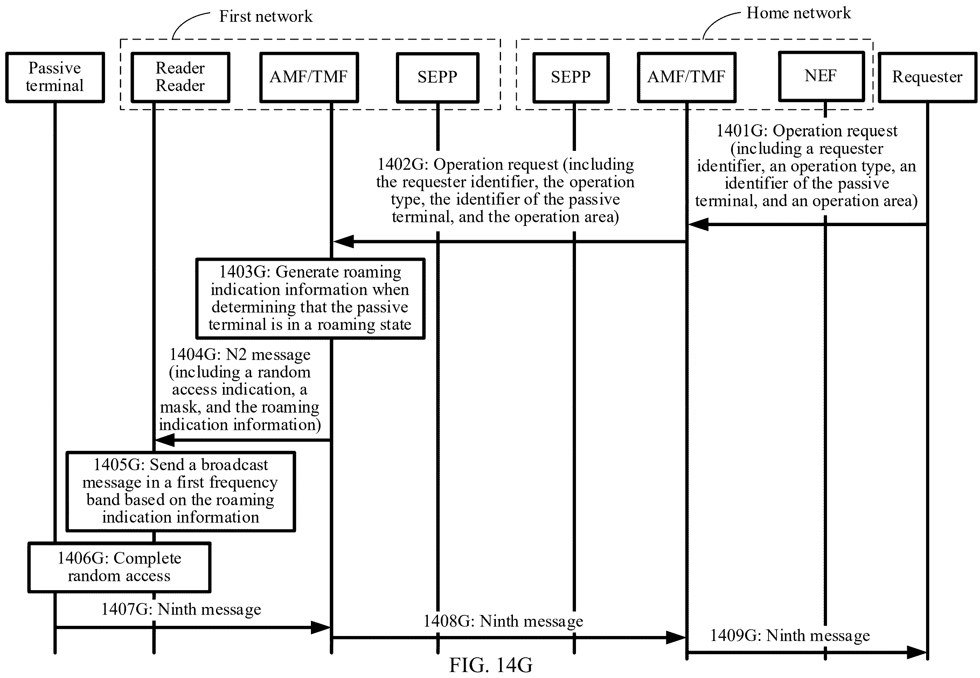

With reference to FIG. 14, the following describes an interaction process between devices in the passive internet of things during implementation of the communication method in FIG. 13, as further supplementary descriptions of the embodiment in FIG. 13.

An interaction procedure between devices in FIG. 14 is as follows:
Step 1401: A reader sends a broadcast message to a passive terminal.

The broadcast message includes a network identifier of a network that the reader is authorized to access.

Step 1402: The passive terminal completes random access to the reader.

Specifically, for the random access process, refer to related descriptions in FIG. 14 and FIG. 6. Step 1403: The passive terminal sends a seventh message (including an identifier of the passive terminal) to a second network element via the reader.

Optionally, the seventh message further includes a part or all of data stored in the passive terminal. Step 1404: The second network element determines a home network of the passive terminal based on the seventh message.

Specifically, the second network element may determine the home network of the passive terminal in the following manners.
(1) The second network element determines, as the home network of the passive terminal based on a mapping relationship between a user identifier and a home network, a home network corresponding to a second user identifier in the seventh message, where the second user identifier indicates a requester that is authorized to operate the passive terminal.
(2) The second network element determines, based on a mapping relationship between a terminal identifier and a home network, a home network corresponding to the identifier of the passive terminal in the seventh message.
(3) The second network element obtains a network identifier of the home network from the seventh message, that is, the seventh message includes the network identifier of the home network of the passive terminal.

Specifically, for specific implementation processes of the foregoing three manners, refer to corresponding descriptions in FIG. 5A. Details are not described herein again.

Step 1405: The second network element sends an eighth message to the requester over the home network.

Specifically, the eighth message includes the identifier of the passive terminal.

Optionally, the eighth message further includes a part or all of data stored in the passive terminal. Optionally, the eighth message may be generated by the second network element or the passive terminal. This is not limited in this application.

Optionally, the first network element may be an access and mobility management function AMF network element, a tag management function TMF network element, or a network exposure function NEF network element.

Optionally, the second network element is an access and mobility management function AMF network element, a tag management function TMF network element, or a network exposure function NEF network element.

For a specific implementation process of the steps in the embodiment in FIG. 14, refer to corresponding descriptions in FIG. 13 and FIG. 5A. Details are not described herein again.

FIG. 14A is a schematic flowchart of yet another communication method according to an embodiment of this application, which is applicable to the network architecture shown in FIG. 3A. As shown in FIG. 14A, the method includes step S1401A and step S1402A.

Step S1401A: A second network element obtains roaming indication information, where the roaming indication information indicates a reader to send a broadcast message in a first frequency band, so that a passive terminal receives the broadcast message.

The first frequency band is different from a frequency band of a network that a requester requests to access.

Optionally, the first frequency band is an unlicensed frequency band or a licensed frequency band of another operator.

It should be noted herein that the roaming indication information may be a special information element (for example, an indication (indication) or a character string), a message of a special type, or other information. This is not limited herein. In addition, the roaming indication information may be referred to as another name, and the roaming indication information is merely an example. In a feasible manner, that the second network element obtains the roaming indication information includes: The second network element receives roaming indication information from a first network element, where the first network element belongs to a home network of the passive terminal, the roaming indication information is generated when the first network element determines that an operation area requested by the requester does not belong to a service range of the home network of the passive terminal (that is, the passive terminal is in a roaming state), and the second network element belongs to a network covering the operation area of the requester. It should be understood that there is a roaming service agreement, for example, a service agreement (service agreement, SLA), between the first network element and the second network element. Optionally, the operation request carries the operation area requested by the requester.

In an example, when the first network element receives the operation request from the requester, the first network element obtains a geographical location of the operation area, and the first network element determines, based on a mapping relationship between a geographical location and a network, one or more networks corresponding to the geographical location of the operation area. If the one or more networks do not include the home network of the passive terminal, the first network element determines that the passive terminal is in the roaming state, the first network element generates the roaming indication information, and the first network element determines, as the first network, the one or more networks corresponding to the geographical location of the operation area, and sends the roaming indication information to the second network element in the first network.

In an example, when the first network element receives the operation request from the requester, the first network element obtains an identifier of the passive terminal, and the first network element determines, based on a mapping relationship between an identifier of a passive terminal and a base station, one or more base stations corresponding to the identifier of the passive terminal. If a network to which the one or more base stations belong does not include the home network of the passive terminal, the first network element determines that the passive terminal is in the roaming state, the first network element generates the roaming indication information, and the first network element determines, as the first network, the network to which the one or more base stations belong, and sends the roaming indication information to the second network element in the first network. The first network element belongs to the home network of the passive terminal.

In an example, when the first network element receives the operation request from the requester, the first network element obtains a network accessed by the passive terminal last time. If the network accessed by the passive terminal last time is not the home network of the passive terminal, the first network element determines that the passive terminal is in the roaming state, the first network element generates the roaming indication information, and the first network element determines, as the first network, the network accessed last time, and sends the roaming indication information to the second network element in the first network. The first network element belongs to the home network of the passive terminal.

In an example, after receiving the operation request from the requester, the second network element sends a first request to a fifth network element, where the first request includes the identifier of the passive terminal, and the fifth network element and the second network element belong to the network that the requester requests to access; and if it is determined that subscription information of the fifth network element does not include the identifier of the passive terminal, the fifth network element determines that the passive terminal is in the roaming state. In other words, the fifth network element determines that the passive terminal does not subscribe to the network that the requester requests to access, and the network that the requester requests to access is not the home network of the passive terminal. The fifth network element generates the roaming indication information, and sends the roaming indication information to the second network element. The fifth network element is a UDM network element. Because the fifth network element belongs to the network that the requester requests to access, the fifth network element may also be referred to as a vUDM network element.

In an example, after receiving the operation request from the requester, the second network element sends a first request to a fifth network element, where the first request includes the identifier of the passive terminal, and the fifth network element and the second network element belong to the network that the requester requests to access; and if it is determined that subscription information of the fifth network element does not include the identifier of the passive terminal, the fifth network element determines that the passive terminal is in the roaming state. In other words, the fifth network element determines that the passive terminal does not subscribe to the network that the requester requests to access, and the network that the requester requests to access is not the home network of the passive terminal. The fifth network element generates first indication information, and sends the first indication information to the second network element, where the first indication information indicates that the subscription information of the fifth network element does not include the identifier of the passive terminal. The second network element generates the roaming indication information based on the first indication information.

In another example, after receiving the operation request from the requester, the first network element sends the operation request to the second network element. The second network element obtains a network identifier of the home network of the passive terminal or interface information when receiving the operation request from the requester. An interface herein is a network element interface between the network that the requester requests to access and a second network, for example, an interface for transmitting signaling between the second network element and the first network element. The signaling herein includes the operation request. The second network element generates the roaming indication information when the second network element determines, based on the network identifier of the home network of the passive terminal, that the home network of the passive terminal is not the network that the requester requests access, or determines, based on the interface information, that the interface for transmitting the signaling between the second network element and the first network element is a roaming interface (also referred to as an inter-network (intra-PLMN) interface).

For example, the operation request carries the network identifier of the home network of the passive terminal.

Optionally, the roaming indication information may be an information element, a message of a special type, or other information. This is not limited herein.

Step S1402A: The second network element sends the roaming indication information to one or more readers.

The one or more readers are within a service range of the second network element.

Specifically, the second network element sends a first message to the one or more readers, where the first message indicates the reader to complete random access with the passive terminal, or indicates the passive terminal to access the first network. The first message includes the roaming indication information. Optionally, the first message further includes a random access indication and a mask. In an example, the first message is an N2 message.

The reader receives the roaming indication information sent by the second network element, and sends the broadcast message in the first frequency band based on the roaming indication information. The passive terminal can receive the broadcast message of the reader in the first frequency band, so that the passive terminal completes random access to the reader. For a specific process, refer to related descriptions in FIG. 6. Details are not described herein again.

In a feasible implementation, the second network element obtains an operation area of the requester, and determines, from readers in the first network based on the operation area of the requester, one or more readers that can cover the operation area requested by the requester.

It can be learned that, when the passive terminal is in the roaming state, that is, when the home network of the passive terminal is different from a network to which the second network element belongs, the second network element sends, to the reader, the roaming indication information indicating the reader to send the broadcast message in the first frequency band, so that the passive terminal can complete random access to the reader, to operate the passive terminal across networks. It should be indicated herein that the first network is a network accessed by the requester or a network covering the operation area requested by the requester. The network accessed by the requester herein may be understood as a network that is directly accessed by the requester and that is different from the home network of the passive terminal, or may be understood as a network accessed by the requester over the home network of the passive terminal.

With reference to FIG. 14B, FIG. 14C, and FIG. 14D, the following describes an interaction process between devices in the passive internet of things during implementation of the communication method in FIG. 14A, as further supplementary descriptions of the embodiment in FIG. 14A. A difference among FIG. 14B, FIG. 14C, and FIG. 14D lies in that FIG. 14B is used to describe that a first network element determines whether a passive terminal is in a roaming state, FIG. 14C is used to describe that a second network element determines whether a passive terminal is in a roaming state, and FIG. 14D is used to describe that a fifth network element determines whether a passive terminal is in a roaming state.

The following describes an interaction procedure between devices in FIG. 14B.

Step 1401B: A requester sends an operation request to a first network element.

The operation request includes but is not limited to a requester identifier, an operation type, an identifier of a passive terminal, and an operation area. The first network element is an AMF network element or a TMF network element in a home network of the passive terminal, and the AMF network element or the TMF network element in the home network may also be referred to as an hAMF network element or an hTMF network element.

Optionally, the identifier of the passive terminal has an operator identifier. In an example, the identifier of the passive terminal includes one or more of a network identifier of the home network, a user identifier, and a sequence number, or the identifier of the passive terminal is a SUPI, that is, the SUPI is reused.

Step 1402B: The first network element generates roaming indication information when determining that the passive terminal is in a roaming state.

Specifically, the first network element receives the operation request from the requester, where the operation request includes the operation area of the requester, the first network element obtains a geographical location of the operation area; and if determining, based on the geographical location of the operation area, that the operation area does not belong to a service range of the home network of the passive terminal, the first network element determines that the passive terminal is in the roaming state, and the first network element generates the roaming indication information.

In an example, the first network element receives the operation request from the requester, where the operation request includes the operation area of the requester, the first network element obtains a geographical location of the operation area, and the first network element determines, based on a mapping relationship between a geographical location and a network, one or more networks corresponding to the geographical location of the operation area. If the one or more networks do not include the home network of the passive terminal, the first network element determines that the passive terminal is in the roaming state, and the first network element generates the roaming indication information and sends the roaming indication information to a second network element. In an example, the first network element receives the operation request from the requester, where the operation request includes an identifier of a passive terminal to be operated, the first network element determines, based on a mapping relationship between an identifier of a passive terminal and a base station, one or more base stations corresponding to the identifier of the passive terminal to be operated. If a network to which the one or more base stations belong does not include the home network of the passive terminal, the first network element determines that the passive terminal is in the roaming state, and the first network element generates the roaming indication information and sends the roaming indication information to a second network element.

In an example, when the first network element receives the operation request from the requester, the first network element obtains a network accessed by the passive terminal last time. If the network accessed by the passive terminal last time is not the home network of the passive terminal, the first network element determines that the passive terminal is in the roaming state, and the first network element generates the roaming indication information and sends the roaming indication information to a second network element.

Step 1403B: The first network element sends the roaming indication information to the second network element.

Specifically, the first network element specifically determines the first network in the following manners.

Manner 1: The first network element receives the operation request from the requester, where the operation request includes the operation area of the requester, and the first network element determines that a network whose coverage area includes the operation area of the requester is the first network.

Manner 2: The first network element receives the operation request from the requester, where the operation request includes the operation area of the requester, and the first network element obtains the geographical location of the operation area, and determines, based on the mapping relationship between the geographical location and the networks that the network corresponding to the geographical location of the operation area is the first network.

Manner 3: The first network element receives the operation request from the requester, where the operation request includes the identifier of the passive terminal to be operated, and the first network element determines, based on the mapping relationship between the identifier of the passive terminal and the base station, the one or more base stations corresponding to the identifier of the passive terminal to be operated, and determines, as the first network, the network corresponding to the one or more base stations.

Manner 4: When the first network element receives the operation request from the requester, the first network element uses, as the first network, the network accessed by the passive terminal to be operated last time.

After determining the first network, the first network element determines the second network element in the first network. The second network element is an AMF network element or a TMF network element in the first network. The AMF network element or the TMF network element in the first network may also be referred to as a vAMF network element or a vTMF network element. The first network element sends the roaming indication information to the second network element. In an example, the first network element sends the operation request to the second network element. In addition to content included in the operation request sent by the requester to the first network element, the operation request further includes the roaming indication information.

Step 1404B: The second network element sends the roaming indication information to a reader.

Specifically, the second network element sends a first message to the reader, where the first message indicates the reader to complete random access with the passive terminal. The first message includes the roaming indication information. Optionally, the first message further includes a random access indication and a mask. In an example, the first message is an N2 message. Step 1405B: The reader sends a broadcast message in a first frequency band based on the roaming indication information.

Step 1406B: The passive terminal completes random access to the reader.

It should be noted herein that, for a specific random access procedure, refer to descriptions in the embodiment in FIG. 6. Details are not described herein again.

Step 1407B: The passive terminal sends a ninth message to the second network element via the reader.

The ninth message includes the identifier of the passive terminal. Optionally, the ninth message further includes a part or all of data stored in the passive terminal.

Step 1408B: The second network element sends the ninth message to the first network element.

Step 1409B: The first network element sends the ninth message to the requester.

It should be noted herein that, after the requester obtains the ninth message, the requester can operate the passive terminal. Further, if the ninth message includes a part or all of data stored in the passive terminal, the requester can directly operate the part or all of the data stored in the passive terminal.

The following describes an interaction procedure between devices in FIG. 14C.

Step 1401C: A requester sends an operation request to a first network element.

It should be noted herein that for specific descriptions of the operation request, refer to related descriptions of step 1401B. Details are not described herein again.

Step 1402C: The first network element sends the operation request to a second network element. Step 1403C: The second network element sends a first request to a fifth network element.

The first request includes an identifier of a passive terminal to be operated. The fifth network element is a UDM network element. The UDM network element belongs to a network accessed by the requester, and the UDM network element may also be referred to as a vUDM network element.

Step 1404C: The fifth network element generates roaming indication information when determining that the passive terminal is in a roaming state.

Specifically, the fifth network element stores a list including an identifier of a passive terminal in a first network or including an identifier of a passive terminal that has accessed the first network. If it is determined that the list stored in the fifth network element does not include the identifier of the passive terminal to be operated, the fifth network element determines that the passive terminal to be operated is in the roaming state, and the first network element generates the roaming indication information.

Step 1405C: The fifth network element sends the roaming indication information to the second network element.

Specifically, the fifth network element sends an operation request to the second network element, where the operation request includes the roaming indication information. Optionally, the operation request further includes but is not limited to a requester identifier, an operation type, the identifier of the passive terminal, and an operation area.

Step 1406C: The second network element sends the roaming indication information to a reader.

In another example, when the fifth network element receives the first request from the second network element, where the first request includes the identifier of the passive terminal to be operated, if it is determined that subscription information of the fifth network element does not include the identifier of the passive terminal, the fifth network element determines that the passive terminal is in the roaming state. In other words, the fifth network element determines that the passive terminal does not subscribe to the first network, and the first network is not a home network of the passive terminal. The fifth network element generates first indication information, and sends the first indication information to the second network element, where the first indication information indicates that the subscription information of the fifth network element does not include the identifier of the passive terminal. The second network element generates the roaming indication information based on the first indication information, and sends the roaming indication information to the reader.

Step 1407C: The reader sends a broadcast message in a first frequency band based on the roaming indication information.

Step 1408C: The passive terminal completes random access to the reader.

Step 1409C: The passive terminal sends a ninth message to the second network element via the reader.

Step 1410C: The second network element sends the ninth message to the first network element.

Step 1411C: The first network element sends the ninth message to the requester.

It should be noted herein that, for a specific process of step 1405C to step 1411C, refer to related descriptions of step 1404B and step 1409B. Details are not described herein again.

The following describes an interaction procedure between devices in FIG. 14D.

Step 1401D: A requester sends an operation request to a first network element.

It should be noted herein that for specific descriptions of the operation request, refer to related descriptions of step 1401B. Details are not described herein again.

Step 1402D: The first network element sends an operation request to a second network element.

Step 1403D: The second network element generates roaming indication information when determining that a passive terminal is in a roaming state.

Specifically, after receiving the operation request from the requester, the first network element sends the operation request to the second network element. The second network element obtains a network identifier of the home network of the passive terminal or interface information when receiving the operation request from the requester. An interface herein is a network element interface between a first network and a second network, for example, an interface for transmitting signaling between the second network element and the first network element, for example, an Nx interface. The signaling herein includes the operation request. When the second network element determines, based on a network identifier of a home network of the passive terminal, that the home network of the passive terminal is not the first network, or determines, based on the interface information, that the interface for transmitting the signaling between the second network element and the first network element is a roaming interface (also referred to as an inter-network (intra-PLMN) interface), the second network element determines that the passive terminal is in the roaming state, and generates the roaming indication information.

Optionally, an identifier of the passive terminal includes the network identifier of the home network of the passive terminal.

Step 1404D: The second network element sends the roaming indication information to a reader. Step 1405D: The reader sends a broadcast message in a first frequency band based on the roaming indication information.

Step 1406D: The passive terminal completes random access to the reader.

Step 1407D: The passive terminal sends a ninth message to the second network element via the reader.

Step 1408D: The second network element sends the ninth message to the first network element.

Step 1409D: The first network element sends the ninth message to the requester.

It should be noted herein that, for a specific process of step 1404D to step 1409D, refer to related descriptions of step 1404B to step 1409B. Details are not described herein again.

FIG. 14E is another specific example of a passive internet of things for implementing a communication method in this application according to an embodiment of this application. In the specific example in FIG. 14E, a requester sends an instruction through a control plane channel. An AMF network element or a TMF network element in a home network in FIG. 14E corresponds to the first network element in FIG. 14B. In other words, a function of the first network element in FIG. 14B is implemented by the AMF network element or the TMF network element in the home network in FIG. 14E. An AMF network element or a TMF network element in a first network in FIG. 14E corresponds to the second network element in FIG. 14B. In other words, a function of the second network element in FIG. 14B is implemented by the AMF network element or the TMF network element in the first network in FIG. 14E. In addition to the AMF network element or the TMF network element in the foregoing embodiment, a home network side further includes a NEF network element and a SEPP network element. In addition to a reader and the AMF network element or the TMF network element, the first network further includes a SEPP network element. A procedure of the communication method shown in FIG. 14E is as follows:
Step 1401E: The requester sends an operation request (including a requester identifier, an operation type, an identifier of a passive terminal, and an operation area) to the AMF network element or the TMF network element in the home network via the NEF network element in the home network.

Step 1402E: The AMF network element or the TMF network element in the home network generates roaming indication information when determining that the passive terminal is in a roaming state.

Step 1403E: The AMF network element or the TMF network element in the home network sends an operation request (including the requester identifier, the operation type, the identifier of the passive terminal, the operation area, and the roaming indication information) to the AMF network element or the TMF network element in the first network via the SEPP network element in the home network and the SEPP network element in the first network.

Step 1404E: The AMF network element or the TMF network element in the first network sends an N2 message (including a random access indication, a mask, and the roaming indication information) to the reader.

Step 1405E: The reader sends a broadcast message in a first frequency band based on the roaming indication information.

Step 1406E: The passive terminal completes random access to the reader.

Step 1407E: The passive terminal sends a ninth message to the AMF network element or the TMF network element in the first network via the reader.

Step 1408E: The AMF network element or the TMF network element in the first network sends the ninth message to the AMF network element or the TMF network element in the home network. Step 1409E: The AMF network element or the TMF network element in the home network sends the ninth message to the requester via the NEF network element.

Specifically, for a specific implementation process of the foregoing steps, refer to corresponding descriptions in the embodiments in FIG. 14A and FIG. 14B. Details are not described herein again. FIG. 14F is another specific example of a passive internet of things for implementing a communication method in this application according to an embodiment of this application. In the specific example in FIG. 14F, a requester sends an instruction through a control plane channel. An AMF network element or a TMF network element in a home network in FIG. 14F corresponds to the first network element in FIG. 14C. In other words, a function of the first network element in FIG. 14B is implemented by the AMF network element or the TMF network element in the home network in FIG. 14E. A UDM network element in a first network in FIG. 14F corresponds to the fifth network element in FIG. 14C. In other words, a function of the fifth network element in FIG. 14C is implemented by the UDM network element in the first network in FIG. 14F. An AMF network element or a TMF network element in the first network in FIG. 14F corresponds to the second network element in FIG. 14C. In other words, a function of the second network element in FIG. 14C is implemented by the AMF network element or the TMF network element in the first network in FIG. 14F. In addition to the AMF network element or the TMF network element in the foregoing embodiment, a home network side further includes a NEF network element and a SEPP network element. In addition to a reader and the AMF network element or the TMF network element, the first network further includes a SEPP network element.

A procedure of the communication method shown in FIG. 14F is as follows:
Step 1401F: The requester sends an operation request (a requester identifier, an operation type, an identifier of a passive terminal, and an operation area) to the AMF network element or the TMF network element in the home network via the NEF network element.

Step 1402F: The AMF network element or the TMF network element in the home network sends the operation request (the requester identifier, the operation type, the identifier of the passive terminal, and the operation area) to the AMF network element or the TMF network element in the first network via the SEPP network element in the home network and the SEPP network element in the first network.

Step 1403F: The AMF network element or the TMF network element in the first network sends a first request (including the identifier of the passive terminal) to the UDM network element in the first network.

Step 1404F: The UDM network element in the first network generates roaming indication information when determining that the passive terminal is in a roaming state.

Step 1405F: The UDM network element in the first network sends an operation request (the requester identifier, the operation type, the identifier of the passive terminal, the operation area, and the roaming indication information) to the AMF network element or the TMF network element in the first network.

Step 1406F: The AMF network element or the TMF network element in the first network sends an N2 message (a random access indication, a mask, and the roaming indication information) to the reader.

Step 1407F: The reader sends a broadcast message in a first frequency band based on the roaming indication information.

Step 1408F: The passive terminal completes random access to the reader.

Step 1409F: The passive terminal sends a ninth message to the AMF network element or the TMF network element in the first network via the reader.

Step 1410F: The AMF network element or the TMF network element in the first network sends the ninth message to the AMF network element or the TMF network element in the home network.

Step 1411F: The AMF network element or the TMF network element in the first network sends the ninth message to the requester.

Specifically, for a specific implementation process of the foregoing steps, refer to corresponding descriptions in the embodiments in FIG. 14A and FIG. 14C. Details are not described herein again.

FIG. 14G is another specific example of a passive internet of things for implementing a communication method in this application according to an embodiment of this application. In the specific example in FIG. 14G, a requester sends an instruction through a control plane channel. An AMF network element or a TMF network element in a home network in FIG. 14G corresponds to the first network element in FIG. 14D. In other words, a function of the first network element in FIG. 14D is implemented by the AMF network element or the TMF network element in the home network in FIG. 14E. An AMF network element or a TMF network element in a first network in FIG. 14G corresponds to the second network element in FIG. 14D. In other words, a function of the second network element in FIG. 14D is implemented by the AMF network element or the TMF network element in the first network in FIG. 14G. In addition to the AMF network element or the TMF network element in the foregoing embodiment, a home network side further includes a NEF network element and a SEPP network element. In addition to a reader and the AMF network element or the TMF network element, the first network further includes a SEPP network element. A procedure of the communication method shown in FIG. 14G is as follows:
Step 1401G: The requester sends an operation request (a requester identifier, an operation type, an identifier of a passive terminal, and an operation area) to the AMF network element or the TMF network element in the home network via the NEF network element.

It should be noted herein that for specific descriptions of the operation request, refer to related descriptions of step 1401B. Details are not described herein again.

Step 1402G: The AMF network element or the TMF network element in the home network sends the operation request (the requester identifier, the operation type, the identifier of the passive terminal, and the operation area) to the AMF network element or the TMF network element in the first network via the SEPP network element in the home network and the SEPP network element in the first network.

Step 1403G: The AMF network element or the TMF network element in the first network generates roaming indication information when determining that the passive terminal is in a roaming state. Step 1404G: The AMF network element or the TMF network element in the first network sends an N2 message (a random access indication, a mask, and the roaming indication information) to the reader.

Step 1405G: The reader sends a broadcast message in a first frequency band based on the roaming indication information.

Step 1406G: The passive terminal completes random access to the reader.

Step 1407G: The passive terminal sends a ninth message to the AMF network element or the TMF network element in the first network via the reader.

Step 1408G: The AMF network element or the TMF network element in the first network sends the ninth message to the AMF network element or the TMF network element in the home network. Step 1409G: The AMF network element or the TMF network element in the home network sends the ninth message to the requester via the NEF network element.

Specifically, for a specific implementation process of the foregoing steps, refer to corresponding descriptions in the embodiments in FIG. 14A and FIG. 14D. Details are not described herein again. It should be noted herein that the passive terminal in FIG. 14A to FIG. 14G is a passive terminal to be operated.

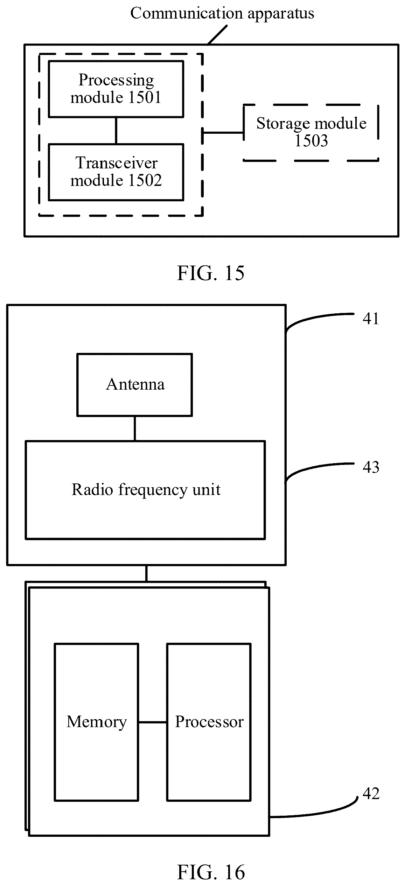

FIG. 15 is a diagram of a structure of a communication apparatus according to an embodiment of this application. The communication apparatus may be configured to perform any method in the foregoing embodiments.

As shown in FIG. 15, the communication apparatus includes a processing module 1501 and a transceiver module 1502. The processing module 1501 may be one or more processors, and the transceiver module 1502 may be a transceiver or a communication interface. The communication apparatus may be configured to implement a requester, a first network element, a second network element, a third network element, a fourth network element, and a reader in any one of the foregoing method embodiments, or configured to implement a function of a network element in any one of the foregoing method embodiments. These network elements or network functions may be network elements in a hardware device, software functions running on dedicated hardware, or virtualization functions instantiated on a platform (for example, a cloud platform). Optionally, the communication apparatus may further include a storage module 1503, configured to store program code and data of the communication apparatus.

In a first example, the communication apparatus may serve as the first network element in FIG. 3A and FIG. 3B or a chip in the first network element, and perform the steps performed by the first network element in the foregoing method embodiments. The transceiver module 1502 is configured to support communication with a second network element, a requester, and the like. The processing module 1501 may be configured to support performing an action that is performed by the first network element in the foregoing method embodiments other than sending and receiving, for example, support the first network element in performing step S420.

Specifically, the transceiver module 1502 is configured to receive an operation request for a passive terminal sent by a requester, where the first network element is in a home network of the passive terminal. The processing module 1501 is configured to determine, based on the operation request or a network accessed by the passive terminal last time, a first network that the requester requests to access. The transceiver module 1502 is further configured to send a request message to a second network element in the first network, where the request message is generated based on the operation request, and the request message indicates the second network element to operate the passive terminal.

In a feasible implementation, the operation request includes a geographical location of the passive terminal; and that the processing module 1501 determines, based on the operation request, the first network that the requester requests to access includes: The processing module 1501 determines, as the first network based on a mapping relationship between a geographical location and a network, a network corresponding to the geographical location of the passive terminal, where each geographical location corresponds to one or more networks.

In a feasible implementation, the operation request includes an identifier of the passive terminal; and that the processing module 1501 determines, based on the operation request, the first network that the requester requests to access includes: The processing module 1501 determines, based on a mapping relationship between an identifier of a passive terminal and a base station, one or more base stations corresponding to the identifier of the passive terminal, and uses, as the first network, a network corresponding to the one or more base stations.

In a feasible implementation, that the processing module 1501 determines, based on the network accessed by the passive terminal last time, the first network that the requester requests to access includes: The processing module 1501 determines, as the first network, the network accessed by the passive terminal last time.

In a feasible implementation, the storage module 1503 is configured to store a network identifier of the first network, or the transceiver module 1502 is further configured to send a network identifier of the first network to a third network element for storage.

In a feasible implementation, the transceiver module 1502 is further configured to send a mask to the second network element, where the mask includes the network identifier of the first network or a network identifier of the home network.

In a feasible implementation, the mask further includes a first user identifier and/or an identifier range of the passive terminal; and the first user identifier indicates the requester, and the identifier range of the passive terminal is generated based on an identifier of the passive terminal.

In a feasible implementation, the identifier of the passive terminal includes one or more of a network identifier list, a second user identifier, or a sequence number; and the network identifier list includes a network identifier of one or more networks that the passive terminal is authorized to access, the second user identifier indicates a requester that is authorized to operate the passive terminal, and the sequence number is an electronic product code EPC or a tag identifier TID.

In a second example, the communication apparatus may serve as the second network element in FIG. 3A and FIG. 3B or a chip in the second network element, and perform the steps performed by the second network element in the foregoing method embodiments. The transceiver module 1502 is configured to support communication with a first network element, a reader, and the like. The processing module 1501 may be configured to support performing an action that is performed by the second network element in the foregoing method embodiments other than sending and receiving, and the like.

Specifically, the transceiver module 1502 is configured to receive a request message for a passive terminal sent by a first network element, and send a first message generated based on the request message to a reader, where the first message indicates the reader to complete random access with the passive terminal, the request message is generated based on an operation request sent by a requester to the first network element, the first network element is in a home network of the passive terminal, and the second network element is in a first network that the requester requests to access. The transceiver module 1502 is further configured to receive a second message sent by the passive terminal via the reader, and the processing module 1501 determines the home network of the passive terminal based on the second message. The transceiver module 1502 is further configured to send a third message to the requester over the home network, where the third message is generated in response to the request message.

In a feasible implementation, the first message includes a mask, and the mask is generated by the second network element based on the request message or received from the first network element; and the mask includes a network identifier of the home network or a network identifier of the first network.

In a feasible implementation, the mask further includes a first user identifier and/or an identifier range of the passive terminal; and the first user identifier indicates the requester, and the identifier range of the passive terminal is generated based on an identifier of the passive terminal.

In a feasible implementation, that the processing module 1501 determines the home network of the passive terminal based on the second message includes: The processing module 1501 determines, as the home network of the passive terminal based on a mapping relationship between a user identifier and a home network, a home network corresponding to a second user identifier in the second message, where the second user identifier indicates a requester that is authorized to operate the passive terminal; the processing module 1501 determines, based on a mapping relationship between a terminal identifier and a home network, a home network corresponding to the identifier of the passive terminal in the second message; the processing module 1501 obtains the network identifier of the home network from the second message; or the processing module 1501 determines, based on a mapping relationship between a tunnel identifier and a user identifier, a first user identifier corresponding to a tunnel carrying the second message, and determines, as the home network of the passive terminal based on a mapping relationship between a user identifier and a home network, a home network corresponding to the first user identifier, where the first user identifier indicates the requester.

In a feasible implementation, when the second message carries the mask and the mask includes the network identifier of the home network, that the processing module 1501 determines the home network of the passive terminal based on the second message includes: The processing module 1501 obtains the network identifier of the home network from the mask carried in the second message.

In a feasible implementation, the second message further includes the network identifier of the home network and/or an indication message, and the indication message indicates that the network identifier included in the mask is different from the network identifier of the home network.

In a feasible implementation, the method further includes: Before the transceiver module 1502 sends the third message to the requester, the processing module 1501 confirms that the requester is authorized to operate the passive terminal.

In a feasible implementation, the identifier of the passive terminal includes one or more of a network identifier list, the second user identifier, or a sequence number; and the network identifier list includes a network identifier of one or more networks subscribed to by the passive terminal, the second user identifier indicates the requester that is authorized to operate the passive terminal, and the sequence number is an electronic product code EPC or a tag identifier TID.

In a feasible implementation, the first network element is an access and mobility management function AMF network element or a tag management function TMF network element, and the second network element is an access and mobility management function AMF network element, a tag management function TMF network element, or a network exposure function NEF network element.

In a third example, the communication apparatus may serve as the passive terminal in FIG. 3A and FIG. 3B or a chip in the passive terminal, and perform the steps performed by the passive terminal in the foregoing method embodiments. The transceiver module 1502 is configured to support communication with a second network element, a reader, and the like. The processing module 1501 may be configured to support performing an action that is performed by the passive terminal in the foregoing method embodiments other than sending and receiving, and the like.

Specifically, the transceiver module 1502 is configured to receive a broadcast message sent by a reader, where the broadcast message is generated based on a first message sent by a second network element to the reader, the broadcast message includes a network identifier of a first network, the second network element is in the first network, the first message is generated based on a request message sent by a first network element to the second network element, and the first network element is in a home network of the passive terminal. The processing module 1501 is configured to: after confirming that the network identifier of the first network is in a network identifier list included in an identifier of the passive terminal, complete random access to the reader using the transceiver module 1502. The storage module 1503 is configured to store the broadcast message. When the second network element successfully operates the passive terminal, the first network is a visited network.

From a perspective of technical effects, when the broadcast message includes the network identifier of the first network, the passive terminal determines, based on accessibility of the network, whether to complete random access, to implement screening of passive terminals within a coverage area of the reader.

In a feasible implementation, the first network element is an access and mobility management function AMF network element or a tag management function TMF network element, and the second network element is an access and mobility management function AMF network element, a tag management function TMF network element, or a network exposure function NEF network element.

In a feasible implementation, the identifier of the passive terminal includes one or more of the network identifier list, a second user identifier, or a sequence number; and the network identifier list includes a network identifier of one or more networks subscribed to by the passive terminal, the second user identifier indicates a requester that is authorized to operate the passive terminal, and the sequence number is an electronic product code EPC or a tag identifier TID.

In a fourth example, the communication apparatus may serve as the requester in FIG. 3C and FIG. 3D or a chip in the requester, and perform the steps performed by the requester in the foregoing method embodiments. The transceiver module 1502 is configured to support communication with a second network element and the like. The processing module 1501 may be configured to support performing an action that is performed by the requester in the foregoing method embodiments other than sending and receiving, and the like.

Specifically, the processing module 1501 determines a first network to be accessed; and the transceiver module 1502 sends an operation request to a second network element in the first network over a home network of a passive terminal, where the operation request indicates the second network element to operate the passive terminal.

In a feasible implementation, that the processing module 1501 determines the first network requested to access includes: The processing module 1501 determines the first network from one or more networks, where the one or more networks are networks that the requester is authorized to use.

In a feasible implementation, the second network element is an access and mobility management function AMF network element, a tag management function TMF network element, or a network exposure function NEF network element.

In a feasible implementation, the transceiver module 1502 is further configured to send a mask to the second network element, where the mask includes a network identifier of the home network or a network identifier of the first network.

In a feasible implementation, the mask further includes a first user identifier and/or an identifier range of the passive terminal; and the first user identifier indicates the requester, and the identifier range of the passive terminal is generated based on an identifier of the passive terminal.

In a feasible implementation, the identifier of the passive terminal includes one or more of the network identifier list, a second user identifier, or a sequence number; and the network identifier list includes a network identifier of one or more networks subscribed to by the passive terminal, the second user identifier indicates a requester that is authorized to operate the passive terminal, and the sequence number is an electronic product code EPC or a tag identifier TID.

In a fifth example, the communication apparatus may serve as the second network element in FIG. 3C and FIG. 3D or a chip in the second network element, and perform the steps performed by the second network element in the foregoing method embodiments. The transceiver module 1502 is configured to support communication with a requester, a reader, and the like. The processing module 1501 may be configured to support performing an action that is performed by the second network element in the foregoing method embodiments other than sending and receiving, and the like.

Specifically, the transceiver module 1502 receives an operation request sent by a requester over a home network of a passive terminal, and sends a fourth message generated based on the operation request to a reader, where the fourth message indicates the reader to complete random access with the passive terminal, and the second network element is in a first network that the requester requests to access. The transceiver module 1502 receives a fifth message sent by the passive terminal via the reader, and the processing module 1501 determines the home network of the passive terminal based on the fifth message. The transceiver module 1502 sends a sixth message to the requester over the home network, where the sixth message is generated in response to the operation request.

In a feasible implementation, the fourth message includes a mask, and the mask is generated by the second network element based on the request message or received from the first network element; and the mask includes a network identifier of the home network or a network identifier of the first network.

In a feasible implementation, the mask further includes a first user identifier and/or an identifier range of the passive terminal; and the first user identifier indicates the requester, and the identifier range of the passive terminal is generated based on an identifier of the passive terminal.

In a feasible implementation, that the processing module 1501 determines the home network of the passive terminal based on the fifth message includes: The processing module 1501 determines, as the home network of the passive terminal based on a mapping relationship between a user identifier and a home network, a home network corresponding to a second user identifier in the fifth message, where the second user identifier indicates a requester that is authorized to operate the passive terminal; the processing module 1501 determines, based on a mapping relationship between a terminal identifier and a home network, a home network corresponding to the identifier of the passive terminal in the fifth message; the processing module 1501 obtains the network identifier of the home network from the fifth message; or the processing module 1501 determines, based on a mapping relationship between a tunnel identifier and a user identifier, a first user identifier corresponding to a tunnel carrying the fifth message, and determines, as the home network of the passive terminal based on a mapping relationship between a user identifier and a home network, a home network corresponding to the first user identifier, where the first user identifier indicates the requester.

In a feasible implementation, when the fifth message carries the mask and the mask includes the network identifier of the home network, that the processing module 1501 determines the home network of the passive terminal based on the second message includes: The processing module 1501 obtains the network identifier of the home network from the mask carried in the fifth message. In a feasible implementation, the fifth message further includes the network identifier of the home network and/or an indication message, and the indication message indicates that the network identifier included in the mask is different from the network identifier of the home network.

In a feasible implementation, before the transceiver module 1502 sends the sixth message to the requester, the processing module 1501 confirms that the requester is authorized to operate the passive terminal.

In a feasible implementation, the identifier of the passive terminal includes one or more of a network identifier list, the second user identifier, or a sequence number; and the network identifier list includes a network identifier of one or more networks subscribed to by the passive terminal, the second user identifier indicates the requester that is authorized to operate the passive terminal, and the sequence number is an electronic product code EPC or a tag identifier TID.

In a feasible implementation, the second network element is an access and mobility management function AMF network element, a tag management function TMF network element, or a network exposure function NEF network element.

The processing module 1501 may be a processor. The processor may execute computer-executable instructions stored in the storage module, to enable the chip to perform the method in any one of the foregoing embodiments.

Further, the processor may include a controller, an arithmetic logic unit, and a register. For example, the controller is mainly responsible for instruction decoding, and transmitting a control signal for an operation corresponding to the instructions. The arithmetic logic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an ASIC architecture, a microprocessor without interlocked piped stages (microprocessor without interlocked piped stages architecture, MIPS) architecture, an advanced reduced instruction set computer machines (advanced RISC machines, ARM) architecture, a second processor (network processor, NP) architecture, or the like. The processor may be a single-core or multi-core processor.

The storage module may be a storage module inside the chip, for example, a register or a cache. Alternatively, the storage module may be a storage module outside the chip, for example, a ROM, another type of static storage device that can store static information and instructions, or a RAM.

It should be noted that functions respectively corresponding to the processor and the interface may be implemented by using a hardware design, or may be implemented by using a software design, or may be implemented by using a combination of software and hardware. This is not limited herein.

In a sixth example, the communication apparatus may serve as the passive terminal in FIG. 3C and FIG. 3D or a chip in the passive terminal, and perform the steps performed by the passive terminal in the foregoing method embodiments. The transceiver module 1502 is configured to support communication with a second network element, a reader, and the like. The processing module 1501 may be configured to support performing an action that is performed by the passive terminal in the foregoing method embodiments other than sending and receiving, and the like.

Specifically, the transceiver module 1502 is configured to receive a broadcast message sent by a reader, where the broadcast message is generated based on a fourth message sent by a second network element to the reader, the fourth message is generated based on an operation request sent by a requester to the second network element over a home network of the passive terminal, the broadcast message includes a network identifier of a first network, and the second network element is in the first network. The processing module 1501 is configured to: after confirming that the network identifier of the first network is in a network identifier list included in an identifier of the passive terminal, complete random access to the reader using the transceiver module 1502. The storage module 1503 is configured to store the broadcast message.

In a feasible implementation, the identifier of the passive terminal includes one or more of the network identifier list, a second user identifier, or a sequence number; and the network identifier list includes a network identifier of one or more networks subscribed to by the passive terminal, the second user identifier indicates a requester that is authorized to operate the passive terminal, and the sequence number is an electronic product code EPC or a tag identifier TID.

In a feasible implementation, the second network element is an access and mobility management function AMF network element, a tag management function TMF network element, or a network exposure function NEF network element.

In a seventh example, the communication apparatus may serve as the passive terminal in the embodiments in FIG. 13 and FIG. 14 or a chip in the passive terminal, and perform the steps performed by the passive terminal in the method embodiments. The transceiver module 1502 is configured to support communication with a second network element, a reader, and the like. The processing module 1501 may be configured to support performing an action that is performed by the passive terminal in the foregoing method embodiments other than sending and receiving, and the like.

Specifically, the transceiver module 1502 is configured to receive a broadcast message sent by a reader, where the broadcast message includes a network identifier of a network that the reader is authorized to access. The processing module 1501 is configured to: after confirming that the network identifier of the network that the reader is authorized to access is in a network identifier list included in an identifier of the passive terminal, complete random access to the reader using the transceiver module 1502.

In a feasible implementation, the identifier of the passive terminal includes one or more of the network identifier list, a second user identifier, or a sequence number; and the network identifier list includes a network identifier of one or more networks subscribed to by the passive terminal, the second user identifier indicates a requester that is authorized to operate the passive terminal, and the sequence number is an electronic product code EPC or a tag identifier TID.

In an eighth example, the communication apparatus may serve as the second network element in the embodiments in FIG. 13 and FIG. 14 or a chip in the second network element, and perform the steps performed by the second network element in the method embodiments. The transceiver module 1502 is configured to support communication with a passive terminal, a reader, a requester, and the like. The processing module 1501 may be configured to support performing an action that is performed by the second network element in the foregoing method embodiments other than sending and receiving, and the like.

Specifically, the transceiver module 1502 is configured to receive a seventh message sent by a passive terminal via a reader, and the processing module 1501 is configured to determine a home network of the passive terminal based on the seventh message, where the second network element is in a first network. The transceiver module 1502 is configured to send, over the home network, an eighth message to a requester that is authorized to operate the passive terminal, where the eighth message includes an identifier of the passive terminal.

In a feasible implementation, the determining the home network of the passive terminal based on the seventh message includes: The second network element determines, as the home network of the passive terminal based on a mapping relationship between a user identifier and a home network, a home network corresponding to a second user identifier in the seventh message, where the second user identifier indicates a requester that is authorized to operate the passive terminal; the second network element determines, based on a mapping relationship between a terminal identifier and a home network, a home network corresponding to the identifier of the passive terminal in the seventh message; or the second network element obtains a network identifier of the home network from the seventh message. In a feasible implementation, the eighth message further includes a part or all of data stored in the passive terminal.

In a feasible implementation, the second network element is an access and mobility management function AMF network element, a tag management function TMF network element, or a network exposure function NEF network element.

In a feasible implementation, the identifier of the passive terminal includes one or more of a network identifier list, the second user identifier, or a sequence number; and the network identifier list includes a network identifier of one or more networks subscribed to by the passive terminal, the second user identifier indicates the requester that is authorized to operate the passive terminal, and the sequence number is an electronic product code EPC or a tag identifier TID.

In a ninth example, the communication apparatus may serve as the second network element in the embodiments in FIG. 14A to FIG. 14D or a chip in the second network element, and perform the steps performed by the second network element in the method embodiments. The transceiver module 1502 is configured to support communication with a passive terminal, a reader, a requester, and the like. The processing module 1501 may be configured to support performing an action that is performed by the second network element in the foregoing method embodiments other than sending and receiving, and the like.

Specifically, the processing module 1501 is configured to obtain roaming indication information, where the roaming indication information indicates a reader to send a broadcast message in a first frequency band, so that a passive terminal receives the broadcast message, and the first frequency band is different from a frequency band of a network that a requester requests to access.

The transceiver module 1502 is configured to send the roaming indication information to one or more readers, where the one or more readers are within a service range of the second network element.

In a feasible implementation, the transceiver module 1502 is further configured to receive roaming indication information from a first network element, where the roaming indication information is generated when the first network element determines that an operation area requested by the requester does not belong to a service range of a home network of the passive terminal, the first network element belongs to the home network of the passive terminal, and the second network element belongs to a network covering the operation area of the requester.

In a feasible implementation, the transceiver module 1502 is further configured to: after receiving an operation request from the requester, send a first request to a fifth network element, where the first request includes an identifier of a passive terminal to be operated; and receive roaming indication information from the fifth network element, where the roaming indication information is generated when the fifth network element determines that subscription information of the fifth network element does not include the identifier of the passive terminal, and the second network element and the fifth network element belong to the network that the requester requests to access. In a feasible implementation, in terms of obtaining the roaming indication information, the processing module 1501 is specifically configured to:
obtain a network identifier of a home network of the passive terminal, or an interface for signaling exchange between the second network element and a first network element, where the first network element belongs to the home network of the passive terminal; and generate the roaming indication information if determining, based on the network identifier of the home network of the passive terminal, that the home network of the passive terminal is not a first network or the interface for signaling exchange between the second network element and the first network element is a roaming interface, where the first network is a network that the requester requests to access.

In a feasible implementation, the transceiver module 1502 is further configured to: after receiving an operation request from the requester, send a first request to a fifth network element, where the first request includes an identifier of a passive terminal to be operated; and receive first indication information from the fifth network element, where the first indication information is generated when the fifth network element determines that subscription information of the fifth network element does not include the identifier of the passive terminal to be operated, the first indication information indicates that the subscription information of the fifth network element does not include the identifier of the passive terminal to be operated, and the second network element and the fifth network element belong to the network that the requester requests to access; and the processing module 1501 is configured to generate the roaming indication information based on the first indication information.

In a feasible implementation, the processing module 1501 is further configured to:
obtain, for the second network element, the operation area requested by the requester; and determine the one or more readers based on the operation area requested by the requester, where a coverage area of the one or more readers includes the operation area.

FIG. 16 is a diagram of a simplified structure of an AN device according to an embodiment of this application, and may be used as an implementation of a reader in this application.

The AN device includes a part for radio frequency signal sending/receiving and conversion and a baseband part 42. The part for radio frequency signal sending/receiving and conversion further includes a receiving module 41 part and a sending module 43 part (which may also be collectively referred to as a transceiver module). The part for radio frequency signal sending/receiving and conversion is mainly configured to send/receive a radio frequency signal and perform conversion between a radio frequency signal and a baseband signal. The baseband part 42 is mainly configured to perform baseband processing, control the AN device, and the like. The receiving module 41 may also be referred to as a receiver, a receiving machine, a receiver circuit, or the like. The sending module 43 may also be referred to as a sender, a transmitter, a transmitting machine, a transmitter circuit, or the like. The baseband part 42 is usually a control center of the AN device, may also be referred to as a processing module, and is configured to perform steps performed by the AN device in any one of the foregoing methods. For details, refer to the foregoing descriptions of the related parts.

The baseband part 42 may include one or more boards. Each board may include one or more processors and one or more memories. The processor is configured to read and execute a program in the memory, to implement a baseband processing function and control the AN device. If there are a plurality of boards, the boards may be interconnected to improve a processing capability. In an optional implementation, the plurality of boards may share one or more processors, or the plurality of boards share one or more memories, or the plurality of boards share one or more processors at the same time.

For example, the sending module 43 is configured to perform a function of the reader in any one of the foregoing methods.

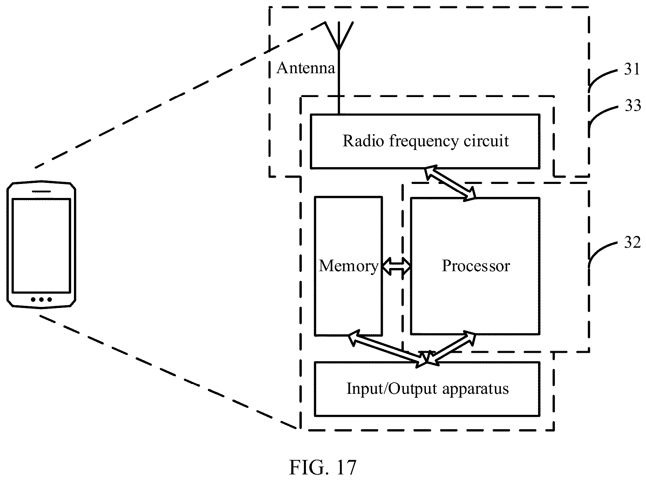

FIG. 17 is a diagram of a simplified structure of UE according to an embodiment of this application, and is used as another implementation of a reader in this application.

For ease of understanding and illustration, in FIG. 17, for example, the UE is a mobile phone. As shown in FIG. 17, the UE includes at least one processor, and may further include a radio frequency circuit, an antenna, and an input/output apparatus. The processor may be configured to process a communication protocol and communication data, and may be further configured to control the UE, execute a software program, process data of the software program, and the like. The UE may further include a memory. The memory is mainly configured to store a software program and data. These related programs may be loaded into the memory when the communication apparatus is delivered from a factory, or may be loaded into the memory when needed later. The radio frequency circuit is mainly configured to: perform conversion between a baseband signal and a radio frequency signal, and process the radio frequency signal. The antenna is mainly configured to receive/send a radio frequency signal in an electromagnetic wave form, and the antenna is the antenna provided in embodiments of this application. The input/output apparatus, such as a touchscreen, a display, or a keyboard, is mainly configured to: receive data input by a user and output data to the user. It should be noted that some types of UE may have no input/output apparatus.

When data needs to be sent, the processor performs baseband processing on the to-be-sent data, and then outputs a baseband signal to the radio frequency circuit. The radio frequency circuit performs radio frequency processing on the baseband signal and then sends a radio frequency signal to the outside in a form of an electromagnetic wave through the antenna. When data is sent to the UE, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 17 shows only one memory and one processor. In an actual UE product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a receiving unit and a sending unit (which may also be collectively referred to as a transceiver unit) of the UE, and a processor having a processing function may be considered as a processing unit of the UE. As shown in FIG. 17, the UE includes a receiving module 31, a processing module 32, and a sending module 33. The receiving module 31 may also be referred to as a receiver, a receiving machine, a receiver circuit, or the like. The sending module 33 may also be referred to as a sender, a transmitter, a transmitting machine, a transmitter circuit, or the like. The processing module 32 may also be referred to as a processor, a processing board, a processing apparatus, or the like.

For example, the processing module 32 is configured to perform a function of the reader in any one of the foregoing methods.

An embodiment of this application provides a communication apparatus. The communication apparatus includes at least one processor and a memory. The memory is configured to store a computer program or instructions. The at least one processor is configured to execute the computer program or the instructions in the memory, so that the method corresponding to each device or network element in any one of the foregoing methods is performed.

An embodiment of this application provides a communication system. The communication system includes a first network element and a second network element.

An embodiment of this application provides a communication system. The communication system includes a first network element, a second network element, and a passive terminal.

An embodiment of this application provides a communication system. The communication system includes a first network element, a second network element, a passive terminal, and a requester. An embodiment of this application provides a communication system. The communication system includes a second network element and a requester.

An embodiment of this application provides a communication system. The communication system includes a second network element, a requester, and a passive terminal.

An embodiment of this application provides a communication system. The communication system includes a second network element and a reader.

An embodiment of this application provides a computer-readable storage medium. The computer-readable storage medium stores computer instructions. When the computer instructions are executed, a computer is enabled to perform the method in any one of the foregoing methods.

An embodiment of this application provides a computer program product. The computer program product includes computer program code. When the computer program code is run on a computer, the computer is enabled to perform the method in any one of the foregoing methods.

An embodiment of this application provides a chip. The chip is coupled to a memory, and is configured to read and execute program instructions in the memory, so that an apparatus in which the chip is located implements the method in any one of the foregoing methods.

In the foregoing embodiments, the description of each embodiment has respective focuses. For a part that is not described in detail in an embodiment, reference may be made to related descriptions in other embodiments. It should be noted that, for brief description, the foregoing method embodiments are represented as a series of action combinations. However, persons skilled in the art should understand that this application is not limited to the described action sequence, because some steps may be performed in other sequences or simultaneously according to this application. It should be further appreciated by persons skilled in the art that embodiments described in this specification all belong to preferred embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A communication method, wherein the method comprises:
receiving, by a first network element, an operation request for a passive terminal sent by a requester, wherein the first network element is in a home network of the passive terminal;
determining, by the first network element based on the operation request or a network accessed by the passive terminal last time, a first network that the requester requests to access; and
sending, by the first network element, a request message to a second network element in the first network, wherein the request message is generated based on the operation request, and the request message indicates the second network element to operate the passive terminal.

2. The method according to claim 1, wherein the operation request comprises a geographical location of the passive terminal; and the determining, by the first network element based on the operation request, the first network that the requester requests to access comprises:
determining, by the first network element as the first network based on a mapping relationship between a geographical location and a network, a network corresponding to the geographical location of the passive terminal, wherein each geographical location corresponds to one or more networks.

3. The method according to claim 1, wherein the determining, by the first network element based on the network accessed by the passive terminal last time, the first network that the requester requests to access comprises:
determining, by the first network element as the first network, the network accessed by the passive terminal last time.

4. The method according to any one of claims 1 to 3, wherein the method further comprises:
storing, by the first network element, a network identifier of the first network, or sending a network identifier of the first network to a third network element for storage.

5. The method according to any one of claims 1 to 4, wherein the method further comprises:
sending, by the first network element, a mask to the second network element, wherein the mask comprises the network identifier of the first network or a network identifier of the home network.

6. The method according to claim 5, wherein
the mask further comprises a first user identifier and/or an identifier range of the passive terminal; and
the first user identifier indicates the requester, and the identifier range of the passive terminal is generated based on an identifier of the passive terminal.

7. The method according to any one of claims 1 to 6, wherein the method further comprises:
before sending the request message, confirming, by the first network element, that the passive terminal has subscribed to the first network.

8. The method according to any one of claims 1 to 7, wherein
the identifier of the passive terminal comprises one or more of a network identifier list, a second user identifier, or a sequence number; and
the network identifier list comprises a network identifier of one or more networks that the passive terminal is authorized to access, the second user identifier indicates a requester that is authorized to operate the passive terminal, and the sequence number is an electronic product code EPC or a tag identifier TID.

9. The method according to any one of claims 1 to 8, wherein
the first network element is an access and mobility management function AMF network element or a tag management function TMF network element, the second network element is an access and mobility management function AMF network element, a tag management function TMF network element, or a network exposure function NEF network element, and the third network element is a unified data repository function UDR network element or a unified data management function UDM network element in the home network.

10. A communication method, wherein the method comprises:
receiving, by a second network element, a request message for a passive terminal sent by a first network element, and sending a first message generated based on the request message to a reader, wherein the first message indicates the reader to complete random access with the passive terminal, the request message is generated based on an operation request sent by a requester to the first network element, the first network element is in a home network of the passive terminal, and the second network element is in a first network that the requester requests to access;
receiving, by the second network element, a second message sent by the passive terminal via the reader, and determining the home network of the passive terminal based on the second message; and
sending, by the second network element, a third message to the requester over the home network, wherein the third message is generated in response to the request message.

11. The method according to claim 10, wherein
the first message comprises a mask, and the mask is generated by the second network element based on the request message or received from the first network element; and
the mask comprises a network identifier of the home network or a network identifier of the first network.

12. The method according to claim 11, wherein
the mask further comprises a first user identifier and/or an identifier range of the passive terminal; and
the first user identifier indicates the requester, and the identifier range of the passive terminal is generated based on an identifier of the passive terminal.

13. The method according to claim 11 or 12, wherein the determining the home network of the passive terminal based on the second message comprises:
determining, by the second network element as the home network of the passive terminal based on a mapping relationship between a user identifier and a home network, a home network corresponding to a second user identifier in the second message, wherein the second user identifier indicates a requester that is authorized to operate the passive terminal;
determining, by the second network element based on a mapping relationship between a terminal identifier and a home network, a home network corresponding to the identifier of the passive terminal in the second message;
obtaining, by the second network element, the network identifier of the home network from the second message; or
determining, by the second network element based on a mapping relationship between a tunnel identifier and a user identifier, a first user identifier corresponding to a tunnel carrying the second message, and determining, as the home network of the passive terminal based on a mapping relationship between a user identifier and a home network, a home network corresponding to the first user identifier, wherein the first user identifier indicates the requester.

14. The method according to claim 11 or 12, wherein when the second message carries the mask and the mask comprises the network identifier of the home network, the determining the home network of the passive terminal based on the second message comprises:
obtaining, by the second network element, the network identifier of the home network from the mask carried in the second message.

15. The method according to claim 13 or 14, wherein
the second message further comprises the network identifier of the home network and/or an indication message, and the indication message indicates that the network identifier comprised in the mask is different from the network identifier of the home network.

16. The method according to any one of claims 12 to 15, wherein the method further comprises:
before the second network element sends the third message to the requester, confirming, by the second network element, that the requester is authorized to operate the passive terminal.

17. The method according to any one of claims 12 to 16, wherein
the identifier of the passive terminal comprises one or more of a network identifier list, the second user identifier, or a sequence number; and
the network identifier list comprises a network identifier of one or more networks subscribed to by the passive terminal, the second user identifier indicates the requester that is authorized to operate the passive terminal, and the sequence number is an electronic product code EPC or a tag identifier TID.

18. The method according to any one of claims 10 to 17, wherein
the first network element is an access and mobility management function AMF network element or a tag management function TMF network element, and the second network element is an access and mobility management function AMF network element, a tag management function TMF network element, or a network exposure function NEF network element.

19. A communication method, wherein the method comprises:
receiving, by a passive terminal, a broadcast message sent by a reader, wherein the broadcast message is generated based on a first message sent by a second network element to the reader, the broadcast message comprises a network identifier of a first network, the second network element is in the first network, the first message is generated based on a request message sent by a first network element to the second network element, and the first network element is in a home network of the passive terminal; and
after the passive terminal confirms that the network identifier of the first network is in a network identifier list comprised in an identifier of the passive terminal, completing, by the passive terminal, random access to the reader.

20. The method according to claim 19, wherein
the first network element is an access and mobility management function AMF network element or a tag management function TMF network element, and the second network element is an access and mobility management function AMF network element, a tag management function TMF network element, or a network exposure function NEF network element.

21. The method according to claim 19 or 20, wherein
the identifier of the passive terminal comprises one or more of the network identifier list, a second user identifier, or a sequence number; and
the network identifier list comprises a network identifier of one or more networks subscribed to by the passive terminal, the second user identifier indicates a requester that is authorized to operate the passive terminal, and the sequence number is an electronic product code EPC or a tag identifier TID.

22. A communication method, wherein the method comprises:
determining, by a requester, a first network to be accessed; and
sending, by the requester, an operation request to a second network element in the first network over a home network of a passive terminal, wherein the operation request indicates the second network element to operate the passive terminal.

23. The method according to claim 22, wherein the determining, by the requester, the first network requested to access comprises:
determining, by the requester, the first network from one or more networks, wherein the one or more networks are networks that the requester is authorized to use.

24. The method according to claim 22 or 23, wherein
the second network element is an access and mobility management function AMF network element, a tag management function TMF network element, or a network exposure function NEF network element.

25. A communication method, wherein the method comprises:
receiving, by a second network element, an operation request sent by a requester over a home network of a passive terminal, and sending a fourth message generated based on the operation request to a reader, wherein the fourth message indicates the reader to complete random access with the passive terminal, and the second network element is in a first network that the requester requests to access;
receiving, by the second network element, a fifth message sent by the passive terminal via the reader, and determining the home network of the passive terminal based on the fifth message; and
sending, by the second network element, a sixth message to the requester over the home network, wherein the sixth message is generated in response to the operation request.

26. The method according to claim 25, wherein
the second network element is an access and mobility management function AMF network element, a tag management function TMF network element, or a network exposure function NEF network element.

27. A communication method, wherein the method comprises:
receiving, by a passive terminal, a broadcast message sent by a reader, wherein the broadcast message is generated based on a fourth message sent by a second network element to the reader, the fourth message is generated based on an operation request sent by a requester to the second network element over a home network of the passive terminal, the broadcast message comprises a network identifier of a first network, and the second network element is in the first network; and
after the passive terminal confirms that the network identifier of the first network is in a network identifier list comprised in an identifier of the passive terminal, completing, by the passive terminal, random access to the reader.

28. The method according to claim 27, wherein
the second network element is an access and mobility management function AMF network element, a tag management function TMF network element, or a network exposure function NEF network element.

29. A communication method, comprising:
obtaining, by a second network element, roaming indication information, wherein the roaming indication information indicates a reader to send a broadcast message in a first frequency band, so that a passive terminal receives the broadcast message, and the first frequency band is different from a frequency band of a network that a requester requests to access; and
sending, by the second network element, the roaming indication information to one or more readers, wherein the one or more readers are within a service range of the second network element.

30. The method according to claim 29, wherein the obtaining, by the second network element, the roaming indication information comprises:
receiving, by the second network element, roaming indication information from a first network element, wherein the roaming indication information is generated when the first network element determines that an operation area requested by the requester does not belong to a service range of a home network of the passive terminal, the first network element belongs to the home network of the passive terminal, and the second network element belongs to a network covering the operation area requested by the requester.

31. The method according to claim 29, wherein the obtaining, by the second network element, the roaming indication information comprises:
after receiving an operation request from the requester, sending, by the second network element, a first request to a fifth network element, wherein the first request comprises an identifier of a passive terminal to be operated; and
receiving roaming indication information from the fifth network element, wherein the roaming indication information is generated when the fifth network element determines that subscription information of the fifth network element does not comprise the identifier of the passive terminal, and the second network element and the fifth network element belong to the network that the requester requests to access.

32. The method according to claim 29, wherein the obtaining, by the second network element, the roaming indication information comprises:
obtaining, by the second network element, a network identifier of a home network of the passive terminal, or an interface for signaling exchange between the second network element and the first network element, wherein the first network element belongs to the home network of the passive terminal; and
generating, by the second network element, the roaming indication information if determining, based on the network identifier of the home network of the passive terminal, that the home network of the passive terminal is not a first network or the interface is a roaming interface, wherein the first network is a network that the requester requests to access.

33. The method according to claim 29, wherein the obtaining, by the second network element, the roaming indication information comprises:
after receiving an operation request from the requester, sending, by the second network element, a first request to a fifth network element, wherein the first request comprises an identifier of a passive terminal to be operated;
receiving first indication information from the fifth network element, wherein the first indication information is generated when the fifth network element determines that subscription information of the fifth network element does not comprise the identifier of the passive terminal to be operated, the first indication information indicates that the subscription information of the fifth network element does not comprise the identifier of the passive terminal to be operated, and the second network element and the fifth network element belong to the network that the requester requests to access; and
generating, by the second network element, the roaming indication information based on the first indication information.

34. The method according to any one of claims 29 to 33, wherein the method further comprises:
obtaining the operation area requested by the requester; and
determining the one or more readers based on the operation area requested by the requester, wherein a coverage area of the one or more readers comprises the operation area.

35. A communication method, comprising:
receiving, by a reader, roaming indication information from a second network element, wherein the second network element belongs to a network that a requester requests to access; and
sending, by the reader, a broadcast message in a first frequency band based on the roaming indication information, wherein the first frequency band is different from a frequency band of the network that the requester requests to access.

36. A communication apparatus, comprising a unit or a module configured to implement the method according to any one of claims 1 to 35.

37. A communication apparatus, wherein
the communication apparatus comprises at least one processor and a memory; and
the memory is configured to store a computer program or instructions, and the at least one processor is configured to execute the computer program or the instructions in the memory, so that the method according to any one of claims 1 to 35 is performed.

38. A communication system, wherein
the communication network comprises a first network element and a second network element; and
the first network element is configured to perform the method according to any one of claims 1 to 9, and the second network element is configured to perform the method according to any one of claims 10 to 18.

39. A communication system, wherein
the communication system comprises a second network element and a requester; and
the second network element is configured to perform the method according to claim 25 or 26, and the requester is configured to perform the method according to any one of claims 21 to 24.

40. A communication system, wherein
the communication system comprises a second network element and a reader; and
the second network element is configured to perform the method according to any one of claims 29 to 34, and the reader is configured to perform the method according to claim 35.

41. A chip system, wherein the chip system comprises at least one processor, a memory, and an interface circuit, wherein the memory, the interface circuit, and the at least one processor are interconnected through a line, the at least one memory stores instructions, and when the instructions are executed by the processor, the method according to any one of claims 1 to 35 is implemented.

42. A computer-readable storage medium, wherein the computer-readable storage medium stores a computer program, and when the computer program is executed, the method according to any one of claims 1 to 35 is implemented.

43. A computer program product, wherein the computer program product comprises instructions, and when the instructions are executed, the method according to any one of claims 1 to 35 is implemented.
